# EUROPÄISCHE PATENTANMELDUNG

(11) **EP 4 339 682 A1**
(43) Veröffentlichungstag der Anmeldung: **20.03.2024**
(21) Anmeldenummer: 23197401.5
(22) Anmeldetag: 14.09.2023
(51) Int. Cl.: G02B 23/04, G02B 23/10, G02B 23/12, G06T 7/00, H04N 23/61, G02B 23/18

(54) **FERNROHR MIT ZUMINDEST EINEM SICHTKANAL**

(30) Priorität: 16.09.2022 AT 507152022
(71) Anmelder: Swarovski-Optik AG & Co KG., 6067 Absam (AT)
(72) Erfinder: ANGERER, Bernhard, 6068 Mils (AT); BLATNIG, Georg, 6020 Innsbruck (AT); DAXNER, Matthias, 6060 Hall in Tirol (AT); DOHR, Mario, 6094 Axams (AT); GRAVOGL, Klaus, 6134 Vomp (AT); JÖRER, Stefan, 6094 Axams (AT); SALZBURGER, Thomas, 6135 Stans (AT); SEEBER, Marco, 6091 Götzens (AT); SONNWEBER, Eva-Maria, 6094 Axams (AT); WACHSMUTH, Sebastian, 6065 Thaur (AT)
(74) Vertreter: Burger, Hannes

(57) **Zusammenfassung**

Die Erfindung betrifft ein Fernrohr (1) mit zumindest einem Sichtkanal (2, 3) , wobei das Fernrohr (1) ein im Sichtkanal (2, 3) sichtbares, insbesondere in den zumindest einen Sichtkanal (2, 3) eingeblendetes, besonders bevorzugt eingespiegeltes, Display (5) aufweist.

## Beschreibung

Die Erfindung betrifft ein Fernrohr mit zumindest einem Sichtkanal.

Weiters betrifft die Erfindung ein Beobachtungs- und Bilderfassungssystem.

Aufgabe der vorliegenden Erfindung ist es, die Nachteile des Standes der Technik zu überwinden und eine Vorrichtung zur Verfügung zu stellen mit der Benutzungskomfort und Kundennutzen erhöht werden können.

Diese Aufgabe wird durch ein Fernrohr der eingangs genannten Art erfindungsgemäß dadurch gelöst, dass es zumindest ein in dem zumindest einen Sichtkanal sichtbares, insbesondere in den zumindest einen Sichtkanal eingeblendetes, besonders bevorzugt eingespiegeltes, Display aufweist.

Durch die erfindungsgemäße Lösung lassen sich gemeinsam mit dem vom Fernrohr erzeugten Bild eines entfernten Objekts zusätzliche Informationen für den Benutzer einblenden. Die erfindungsgemäße Lösung ermöglicht es daher, dem Benutzer während der Betrachtung des entfernten Objekts das erzeugte Bild mit Daten anzureichern.

Vorteilhafterweise weist das Fernrohr zumindest eine Kamera auf.

Gemäß einer bevorzugten Variante der Erfindung kann es vorgesehen sein, dass das Fernrohr dazu eingerichtet ist, Objekte in von der Kamera aufgenommenen Bildern zu erkennen. Durch die Objekterkennung ist es möglich, Informationen zu den erkannten Objekten für den Benutzer einzublenden und dem Bild des Objekts zu überlagern. Die Erkennung kann dabei über Methoden der künstlichen Intelligenz wie zum Beispiel mittels neuronaler Netzwerke erfolgen. Weiter ist es von Vorteil, wenn das Fernrohr dazu eingerichtet ist, einen virtuellen Markierungsrahmen zu erzeugen und auf dem Display darzustellen, wobei es weiters dazu eingerichtet ist, zumindest ein innerhalb des Markierungsrahmens des Displays, dargestelltes Objekt zu erkennen. Auf diese Weise wird die Darstellung spezifischer objektbezogener Informationen erleichtert. So kann ein Benutzer, wenn er zusätzliche Informationen zu einem Objekt, beispielsweise einem Tier, insbesondere einem Vogel wünscht, das Objekt mit dem Fernrohr gezielt erfassen und sich zusätzliche Informationen einblenden lassen. Die Objekterkennung kann automatisch erfolgen oder durch Ausführen einer zusätzlichen Aktion durch den Benutzer, beispielsweise durch Betätigen eines Betätigungselements, insbesondere eines Schalters, oder dadurch, dass das betrachtete Objekt für einen vorgegebenen Zeitpunkt innerhalb des Markierungsrahmens erscheint. Eine automatische Objekterkennung kann beispielsweise durch eine Vorauswahl und Aktivieren dieser Funktion durch den Benutzer erfolgen.

Es ist aber auch möglich, innerhalb des gesamten Sehfeldes der Kamera eine Objekterkennung durchzuführen und in einem ersten Schritt eines mehrstufigen Verfahrens die erkannten Objekte automatisch nach Klassen zu identifizieren (zum Beispiel "Vogel" oder "Säugetier"). In einem weiteren Schritt kann basierend auf der ersten Klassifizierung eine detaillierte Identifikation durchgeführt werden.

Zur Verbesserung der Genauigkeit der Erkennung/Klassifizierung ist es möglich, neben der Analyse des Bildinhaltes der aufgenommenen Bilder auch weitere Daten in die Auswertung mit einzubeziehen. So ist es zum Beispiel von Vorteil, Standortinformationen des Aufnahmeortes in der Auswertung zu berücksichtigen (z.B. mittels GPS), da damit Aufenthaltswahrscheinlichkeiten des zu erkennenden Objektes verbunden sind. Ebenfalls ist es denkbar, neben der Bildaufnahme auch die Entfernung zum Objekt zu messen. Dies kann über einen separaten oder integrierten Entfernungsmesser erfolgen. Aus der Entfernung zum Objekt und der subjektiven Objektgröße (z.B. Anzahl der Pixel im Bild) lässt sich auf die tatsächliche Größe des Objektes schließen. Die somit ermittelte Objektgröße oder auch Informationen über das Datum/Uhrzeit der Aufnahme oder die aktuelle Wettersituation können ebenfalls als weitere Parameter bei der Erkennung mitberücksichtigt werden. Besonders vorteilhaft kann es sein, wenn das Fernrohr zumindest einen Speicher mit benutzer- und/oder themen- und/oder ortsspezifischen Informationen, insbesondere Informationen zu lokal vorkommenden Tierarten und/oder Flurbezeichnung und/oder Bergnamen und/oder POIs (Points of Interest) aufweist und/oder, dass das Fernrohr eine Datenschnittstelle zum Datenaustausch mit zumindest einem externen Speicher mit benutzer- und/oder themen- und/oder ortsspezifischen, Informationen, insbesondere Informationen zu lokal vorkommenden Tierarten und/oder Flurbezeichnung und/oder Bergnamen und/oder POIs aufweist.

Als besonders vorteilhaft hat sich erwiesen, wenn das Fernrohr dazu eingerichtet ist, bei einer Betätigung eines Betätigungselements basierend auf einer detektierten momentanen Bewegung des Fernrohres, eine zu erreichende Bildschärfe für ein mit der Kamera aufzunehmendes Bild zu berechnen und dem Benutzer anzuzeigen, ob die Aufnahme mit einer erforderlichen Bildschärfe gemacht werden kann und/oder dem Benutzer anzuzeigen, ob die zu erreichende Bildschärfe für eine automatische Objekterkennung geeignet ist.

Gemäß einer vorteilhaften Variante der Erfindung kann es vorgesehen sein, dass das Fernrohr zumindest eine Kamera Fokussierlinse und zumindest eine in dem Sichtkanal angeordnete Fokussierlinse aufweist, wobei das Fernrohr dazu eingerichtet ist, eine relative Lage einer Bildmitte eines Kamerabilds relativ zu einer Bildmitte eines in dem zumindest einen Sichtkanal dargestellten Bildes anhand einer Verschiebung der Fokussierlinsen zu ermitteln. In diesem Zusammenhang kann es von Vorteil sein, wenn das Fernrohr dazu eingerichtet ist, eine Abweichung der Bildmitten zu korrigieren, beispielsweise durch Verschieben des Kamerabildes, derart dass einander entsprechende Bildausschnitte des Kamerabildes und des im Sichtkanal dargestellten Bildes in beiden Bildern in der Bildmitte zu liegen kommen.

Als besonders vorteilhaft hat sich auch herausgestellt, dass ein Sehfeld der Kamera größer ist als ein Sehfeld des zumindest einen Sichtkanals, wobei ein von einem Bilderfassungssensor der Kamera erfasster feldseitiger Bildausschnitt größer als ein von dem zumindest einen Sichtkanal erfasster feldseitiger Bildausschnitt ist. Auf diese Weise wird nicht nur ein Verschieben der Bildmitte des Kamerabildes erleichtert, sondern es können beispielsweise auch nicht unmittelbar in dem Sichtkanal sichtbare Objekte, die sich außerhalb des Sehfeldes des durch den Sichtkanal blickenden Benutzers befinden, aber von dem Bildsensor erfasst werden, automatisch erkannt und ggfls. ein Hinweis auf ein erkanntes Objekt für den Benutzer in den Sichtkanal eingeblendet werden.

Weiters hat es sich als besonders vorteilhaft erwiesen, dass das Fernrohr dazu eingerichtet ist, zumindest eine Lageänderung des Fernrohres zu erfassen.

Darüber hinaus kann das Fernrohr dazu eingerichtet sein, ein in einer aktuellen Position und Lage des Fernrohres abgebildetes Objekt mit einer virtuellen Markierung zu versehen und zu speichern. Diese Variante der Erfindung ermöglicht es, ein bestimmtes Objekt, beispielsweise eine Landschaftsmarke, ein Tier, einen Berggipfel, ein Bauwerk, etc., mit einer bestimmten Position und Ausrichtung des Fernrohres zu verknüpfen.

Als besonders günstig hat sich in diesem Zusammenhang herausgestellt, wenn das Fernrohr dazu eingerichtet ist, bei einer Veränderung einer Ausrichtung des Fernrohres gegenüber jener Position, an der die virtuelle Markierung gesetzt ist, zumindest einen Hinweis einzublenden, der einem Benutzer eine Richtung anzeigt, in der sich die virtuelle Markierung befindet. Diese Variante der Erfindung ist besonders von Vorteil, wenn das Fernrohr von einem ersten Benutzer, beispielsweise an einen neben ihm stehenden, zweiten Benutzer weitergereicht wird, da dies dem zweiten Benutzer ein sehr einfaches Auffinden und Betrachten des markierten Objekts ermöglicht.

Weiters kann das Fernrohr ein, bevorzugt an einer benutzerseitigen Stirnseite des Fernrohres angeordnetes, Moduswahlrad zum Aufrufen zumindest einer Funktion des Fernrohres aufweisen, wobei in unterschiedlichen Stellungen des Moduswahlrades unterschiedliche Funktionen aufgerufen sind. Diese Variante der Erfindung ermöglicht ein besonders einfaches Einstellen unterschiedlicher Modi des Fernrohres. So kann beispielsweise, die automatische Bilderkennung mittels diese Moduswahlrades ausgewählt werden.

Darüber hinaus hat es sich als besonders vorteilhaft erwiesen, dass zumindest eine Stellung des Moduswahlrades mit einer von einem Benutzer wählbaren Funktion belegbar ist. Dies gibt dem Benutzer die Möglichkeit, bevorzugte Funktionen sehr schnell aufrufbar zu machen.

Gemäß einer weiteren Variante der Erfindung kann das Fernrohr ein binokulares Fernrohr mit einem ersten Tubus und mit einem zweiten Tubus sein, wobei durch ersten Tubus ein erster Sichtkanal und durch den zweiten Tubus ein zweiter Sichtkanal verläuft,
- wobei die beiden Tuben durch eine Gelenkbrücke miteinander verbunden sind,
- wobei die beiden Tuben zur Einstellung eines Augenabstands um eine Gelenkachse der Gelenkbrücke schwenkbar sind,
- und wobei die Kamera einen Kamera-Strahlengang aufweist,
- wobei die Gelenkachse und eine optische Achse des Kamera-Strahlengangs koaxial zueinander angeordnet sind,
- und wobei ein den Kamera-Strahlengang enthaltender Kamera-Tubus die Gelenkachse der Gelenkbrücke bildet. Diese Variante der Erfindung ermöglicht ein sehr gutes Betrachten von Objekten und liegt bequem und ruhig in der Hand.

Weiters kann es vorgesehen sein, dass in jedem der Sichtkanäle ein Strahlengang durch ein Objektiv, eine Fokussierlinse, ein Umkehrsystem und ein Okular ausgebildet ist. Auch kann der Kamera-Strahlengang in dem Kamera-Tubus durch ein Kamera-Objektiv, zweite Kamera-Fokussierlinse und ein Kamera-Okular sowie einen Bilderfassungssensor ausgebildet sein, wobei das Kamera-Okular zwischen der Kamera-Fokussierlinse und dem Bildsensor angeordnet ist. Weiters können die Fokussierlinsen der Sichtkanäle und die Kamera-Fokussierlinse mittels einer Fokussiereinrichtung gemeinsam verschiebbar sein. Als "Linse" kann in diesem Zusammenhang sowohl eine Einzellinse als auch ein Linsensystem bestehend aus mehreren Linsen verstanden werden.

Als besonders vorteilhaft hat sich erwiesen, dass ein erster Gelenkteil des ersten Tubus und ein zweiter Gelenkteil des zweiten Tubus an einer Mantelfläche des Kamera-Tubus anliegend angeordnet sind.

Besonders bevorzugt kann der Kamera-Tubus mit einer Federanordnung zur Erzeugung eines Schwenkwiderstands zwischen dem ersten Gelenkteil des ersten Tubus und dem zweiten Gelenkteil des zweiten Tubus ausgebildet sein.

Als besonders vorteilhaft hat sich herausgestellt, dass die Federanordnung um den Kamera-Strahlengang angeordnet ist und insbesondere zumindest eine Wellenfeder umfasst. Diese Variante der Erfindung zeichnet sich dadurch aus, dass trotz der Federanordnung die Baulänge des Kamerakanals und somit des gesamten Geräts sehr geringgehalten werden kann.

Weiters hat es sich als besonders vorteilhaft herausgestellt, dass die zumindest eine Federanordnung zumindest eine Durchbrechung aufweist, durch welche eine Stange zum Verschieben einer Fokussierlinse des Kamera-Strahlengangs verläuft. Durch diese Weiterbildung der Erfindung lässt sich eine besonders platzsparende Anordnung für die Betätigung der Fokussierlinse der Kamera realisieren, ohne dass die von der Federanordnung ausgeübte Klemm- und Haltefunktion beeinträchtig würde.

Weiters kann es vorgesehen sein, dass der Kamera-Tubus mit einem der beiden Tuben fest verbunden ist und der Kamera-Tubus und der mit ihm verbundene Tubus nur gemeinsam relativ zu dem anderen Tubus verschwenkbar sind. Das Display kann in zumindest einem der beiden Tuben, bevorzugt in dem ersten fest mit dem Kamera-Tubus verbundenen Tubus, angeordnet sein. Darüber hinaus kann auch in beiden Sichtkanal-Tuben ein Display angeordnet sein.

Als Kamera ist die Kombination eines Objektives mit einem bildgebenden Sensor und einer Auswerteelektronik zu verstehen, welche eine Abbildung elektromagnetischer Strahlung (z.B. im UV, sichtbaren oder IR Spektralbereich) durch das Objektiv auf einen zweidimensionalen Sensor (z.B. CCD, CMOS, Mikrobolometer) in elektrische Bildinformation umwandeln kann. Besonders vorteilhaft ist es, wenn das Fernrohr dazu eingerichtet ist, bei einer Einstellung eines Augenabstandes durch Verschwenken des ersten und des zweiten Tubus gegeneinander, einen Schwenkwinkel zu erfassen und anhand des erfassten Schwenkwinkel eine Positionskorrektur von auf dem Display dargestellten Informationen vorzunehmen.

Weiters kann das Fernrohr einen Fokussierknopf zur Einstellung einer Fokussierung aufweisen, bevorzugt kann ein Schwerpunkt des Fernrohres im Bereich des Fokussierknopfes liegen.

Die oben genannte Aufgabe wird auch mit einem Beobachtungs- und Bilderfassungssystem dadurch gelöst, es zumindest ein erfindungsgemäßes Fernrohr und zumindest ein elektronisches Endgerät umfasst, wobei das zumindest eine Fernrohr und das zumindest eine elektronische Endgerät über eine Verbindung zumindest zeitweise miteinander gekoppelt sind.

Als besonders vorteilhaft hat sich erwiesen, dass das Beobachtungs- und Bilderfassungssystem zumindest ein Anwendungsprogramm aufweist, das mittels des Endgerätes von einem Server auf das Fernrohr übertragbar ist, und/oder dass das Anwendungsprogramm, wenn es auf dem Fernrohr installiert ist, mittels des Endgerätes zugreifbar und/oder ausführbar ist.

Gemäß einer vorteilhaften Weiterbildung der Erfindung kann es vorgesehen sein, dass über einen Zugriff mit dem Endgerät auf das zumindest eine Anwendungsprogramm Funktionen oder Parameter des Anwendungsprogrammes veränderbar sind.

Weiters ist es bevorzugt, dass das Fernrohr dazu eingerichtet ist je nach Auswahl der Funktionen und Parameter unterschiedliche Informationen auf dem Display darzustellen.

Zum besseren Verständnis der Erfindung wird diese anhand der nachfolgenden Figuren näher erläutert.

Es zeigen jeweils in stark vereinfachter, schematischer Darstellung:
- Fig. 1: ein Blockschaltbild eines erfindungsgemäßen Fernrohres;
- Fig. 2: eine erste Anzeige auf einem Display des Fernrohres aus Fig. 1;
- Fig. 3: eine zweite Anzeige auf einem Display des Fernrohres aus Fig. 1;
- Fig. 4: einen Ablauf einer Verwendung des Fernrohres aus Fig. 1;
- Fig. 5: eine Überlagerung einer Anzeige auf einem Display mit einem Bild eines beobachteten Objekts;
- Fig. 6: eine weitere Überlagerung einer Anzeige auf einem Display mit einem Bild eines beobachteten Objekts;
- Fig. 7: eine weitere Überlagerung einer Anzeige auf einem Display mit einem Bild eines beobachteten Objekts;
- Fig. 8: eine weitere Überlagerung einer Anzeige auf einem Display mit einem Bild eines beobachteten Objekts;
- Fig. 9: einen Ablauf einer Verwendung des Fernrohres aus Fig. 1;
- Fig. 10: ein Blockschaltbild eines erfindungsgemäßes Beobachtungs- und Bilderfassungssystem;
- Fig. 11: eine Anzeige auf einem Endgerät des Beobachtungs- und Bilderfassungssystems aus Fig. 10;
- Fig. 12: eine perspektivische Ansicht eines erfindungsgemäßen Fernrohres;
- Fig. 13: eine Draufsicht auf das Fernrohr aus Fig. 12;
- Fig. 14: eine perspektivische Ansicht von zwei Gelenkteilen einer Knickbrücke des Fernrohres aus Fig. 12;
- Fig. 15: einen Kamera-Tubus des Fernrohres aus Fig. 12;
- Fig. 16: den Kamera-Tubus aus Fig. 15 mit entnommenem Federpaket;
- Fig. 17: einen Schnitt entlang der Linie A-A in Fig. 13;
- Fig. 18: einen Verstellmechanismus für Fokussierlinsen des Fernrohres aus Fig. 12;
- Fig. 19: eine Anzeige auf dem Display bei unterschiedlichen Augenabständen des Fernrohres aus Fig. 12;
- Fig. 20: einen Längsschnitt des Sichtkanals des Fernrohres gemäß Fig. 12 gemeinsam mit dem Strahlengang eines das Display bildenden LCoS-Displays;
- Fig. 21: ein Detail des Sichtkanals des Fernrohrs nach dem Ausführungsbeispiel gemäß Fig. 12, teilweise geschnitten und perspektivisch dargestellt;
- Fig. 22: Vergleich zweier Bilder des Sehfelds, wie sie einem Benutzer erscheinen;
- Fig. 23: einen Querschnitt des Fernrohrs gemäß den Fig. 12, 13, perspektivisch dargestellt;
- Fig. 24: ein Detail der internen Leitungsverbindung des Fernrohrs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

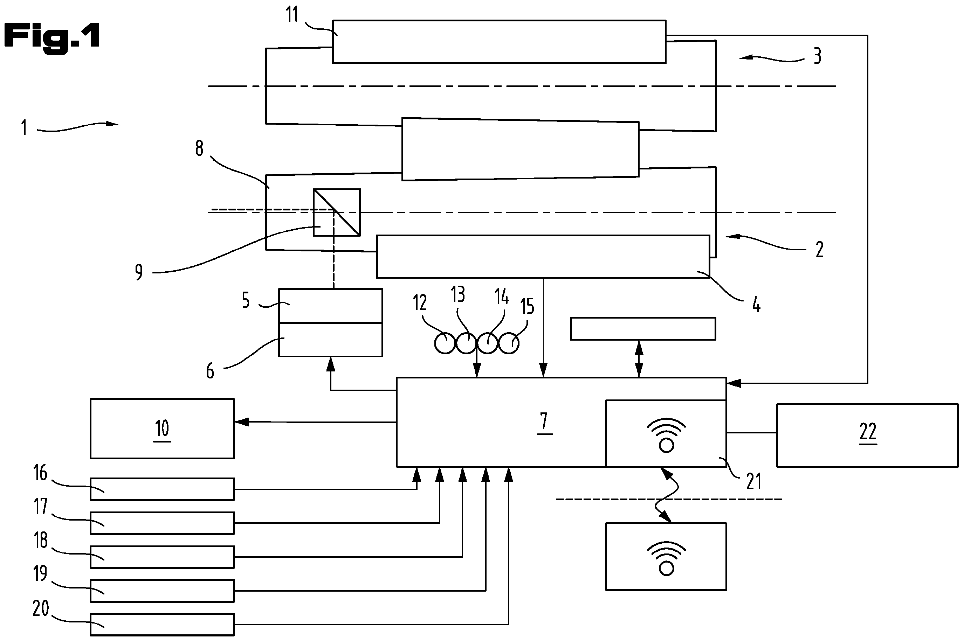

Gemäß Fig. 1 weist ein erfindungsgemäßes Fernrohr 1 einen Sichtkanal 2 oder zwei Sichtkanäle 2 und 3 sowie mindestens eine Kamera 4 auf. Das Fernrohr 1 weist ein in dem Sichtkanal 2 sichtbares, insbesondere in den einen Sichtkanal 2 eingeblendetes, besonders bevorzugt eingespiegeltes Display 5 auf. Für den Fall, dass das Fernrohr 1 zwei Sichtkanäle 2, 3 aufweist, kann es vorgesehen sein, dass in jeden der Sichtkanäle 2, 3 je ein Display eingeblendet wird. Besonders bevorzugt handelt es sich bei dem Display 5 um ein LCoS-Display (LCoS = Liquid Crystal on Silicon).

Das Display 5 kann über einen Display Treiber 6 von einer Steuerung 7 des Fernrohres 1 angesteuert werden. Bei der Steuerung 7 handelt es sich bevorzugt um eine programmierbare Schaltung, beispielsweise in Form eines Prozessors, insbesondere um einen Mikro- oder Signalprozessor. Die auf dem Display 5 dargestellten Informationen werden in der dargestellten Ausführungsform in den Sichtkanal 2 eingespiegelt.

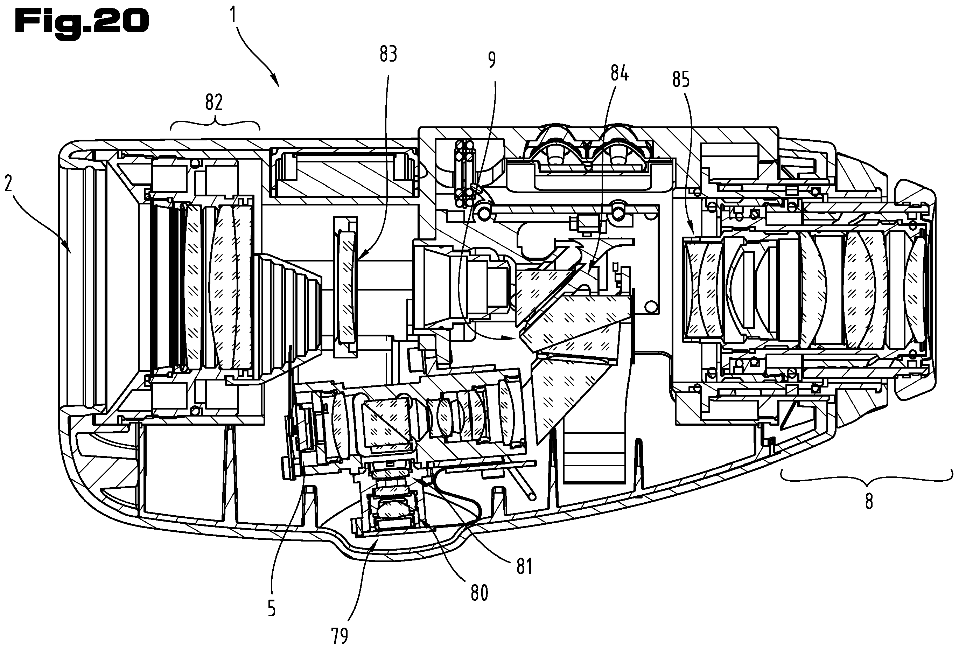

Eine konkrete konstruktive Ausbildung eines solchen Strahlengangs des Sichtkanals 2, mit dem ein Strahlengang des Displays 5 zur Einspiegelung der Anzeige gekoppelt ist, ist in der Fig. 20 dargestellt. Die Fig. 20 zeigt dabei einen Längsschnitt des Sichtkanals 2 des Fernrohres 1 gemeinsam mit dem Strahlengang eines das Display 5 bildenden LCoS-Displays. Dabei wird das Licht einer zur Beleuchtung verwendeten LED 79 über einen Kondensor 80 kollimiert und fällt auf ein Linsenarray 81. Jede Einzellinse dieses Arrays erzeugt ein (verkleinertes) Zwischenbild der LED auf einem relativ großen, von der LED-Größe unabhängigen Bereich. Jedes dieser Bilder leuchtet jeweils das komplette Display 5 aus. Dabei wird der Umriss der Einzellinsen genau auf das Display 5 abgebildet und definiert so den ausgeleuchteten Bereich. Das Display 5 bzw. die darauf erzeugte Anzeige wird an der Spiegelfläche am Anzeigenprismas 9 in den Sichtkanal 2 eingekoppelt und so in dessen Bildebene abgebildet. Bei diesem Ausführungsbeispiel ist dazu ein Schmidt-Pechan-Prismensystem mit zusätzlichen Prismen für die Display-Einspiegelung vorgesehen. Am Ort der Austrittspupille (AP) der Sichtoptik des Sichtkanals 2 bilden die einzelnen LED-Bilder einen (relativ großen) Bereich, in welchem das Display 5 sichtbar ist. Eine große AP sozusagen.

Ein Benutzer sieht bei einem Blick durch ein Okular 8 des Sichtkanals 2 die Überlagerung eines Bildes eines entfernten Objektes und einer von dem Display 5 erzeugten Anzeige. Die Anzeige des Display 5 gelangt in der dargestellten Ausführungsform über ein Anzeigen-Prisma 9 (Fig. 20) in einen Strahlengang des Sichtkanals 2 und dann in das Auge eines Benutzers. Dabei können die von dem Display 5 kommenden Lichtstrahlen an einer diagonal verlaufenden Grenzfläche 10 des als Strahlenteilerwürfel ausgebildeten Anzeigen-Prismas 9 durch Reflexion um 90° umgelenkt und so in Richtung auf das Okular 8 und in den Strahlengang des Sichtkanals 2 geleitet werden.

Das Display 5 kann mit einer Beleuchtungsvorrichtung beleuchtet werden. Die Beleuchtungsvorrichtung kann eine Lichtquelle aufweisen, deren Licht auf das Display 5 hingelenkt wird, wobei es zunächst durch eine Beleuchtungslinse fokussiert/kollimiert und durch einen Polarisator polarisiert werden kann. Flüssigkristallmoleküle des Displays 5 können per elektrischer Spannung so ausgerichtet werden, dass das Licht in der gewünschten Helligkeit reflektiert wird. Die zur Erzeugung eines Bildes auf der Display 5 erforderliche Ausrichtung der Flüssigkristallmoleküle wird durch die Steuerung 7 bewirkt.

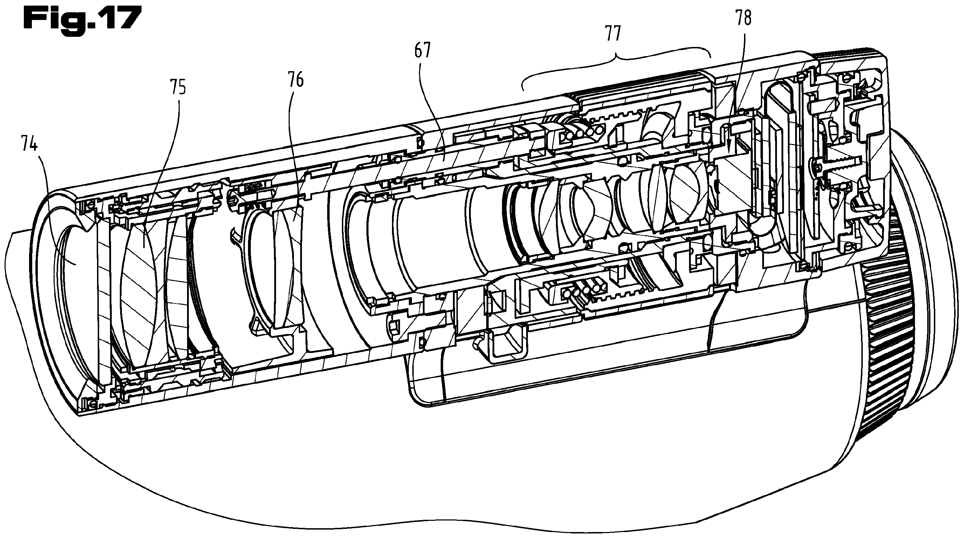

Aus Gründen der Übersichtlichkeit sind in Fig. 1 die optischen Komponenten der Sichtkanäle 2, 3 und eines die Kamera 4 umfassenden Kamerakanals nicht näher dargestellt. Jedoch soll an dieser Stelle kurz ein möglicher Aufbau beschrieben werden. Sowohl der Sichtkanal 2 als auch der Kamerakanal können objektseitig ein Deckglas aufweisen oder auch nur der Kamerakanal alleine. Der Sichtkanal 2 weist eine Objektivlinse 82, eine Fokussierlinse 83, ein durch Prismen gebildetes Umkehrsystem 84, eine Feldlinse 85, und die Okularlinse 8 auf. Durch die genannten optischen Elemente wird in dem Sichtkanal 2 ein erster Strahlengang zur vergrößerten Darstellung eines entfernten Gegenstands gebildet. Andererseits ist in dem Kamerakanal ein zweiter Strahlengang ausgebildet. Dessen optische Elemente umfassen, anschließend an das Deckglas 74, eine Objektivlinse 75, eine Fokussierlinse 76, eine Okularlinse 77 (Fig. 17) und ein Kameramodul 78 bzw. die Kamera 4. Die Objektivlinse 75, die Fokussierlinse 76 und die Okularlinse 77 des Kamerakanals können gemeinsam ein afokales Linsensystem bilden. Das Kameramodul bzw. die Kamera 4 wird vorzugsweise als Einheit mit einem elektronischen Bilderfassungssensor, einem eigenen Objektiv und mit einer integrierten Autofokusfunktion gebildet. Falls das Fernrohr 1 einen zweiten Sichtkanal 3 aufweist, kann dieser optisch gleich aufgebaut sein wie der Sichtkanal 2.

Weiters kann das Fernrohr 1 eine Anzeigeeinheit 10 und/oder mehrere beleuchtbare Anzeigesegmente, beispielsweise zur Darstellung eines Ladezustands eines Energiespeichers 11 des Fernrohres 1 aufweisen. Mittels einer farblich veränderlichen Beleuchtungseinheit kann die Anzeigeeinheit 10 in unterschiedlichen Farben beleuchtbar, wobei unterschiedliche Betriebszustände des fernoptischen Geräts 1 visualisierbar sein können.

Beispielsweise kann eine Betriebsbereitschaft bzw. ein Einschalten des Fernrohres 1 mittels einer Beleuchtung der Anzeigeeinheit 10 mit einer ersten Farbe signalisiert werden.

Zum Ausführen von Aktionen, beispielsweise zum Bestätigen von Eingaben, Vor- und Zurückscrollen in einem auf dem Display 5 dargestellten Menü, etc. können eine oder mehrere elektronische Bedienelemente 12, 13, 14, 15, beispielsweise Bedientasten, vorgesehen sein.

Weiter kann das Fernrohr mehrere Sensoren 16, 17, 18, 19, 20 umfassen, wie einen Geopositionserfassungssensor 16, insbesondere einen GPS-, GLONASS, Galileo- oder Beidou-Empfänger. Weiters hat es sich als besonders günstig herausgestellt, wenn das Fernrohr auch einen Helligkeitssensor 17, einen elektronischen Kompass 18, einen Neigungs- und/oder Gyrosensor 19, beispielsweise ein Gyroskop und einen Sensor 20 zur Erfassung einer linearen Verschiebung der Fokuslinsen 76, 83 aufweist (Fig. 17, 20).

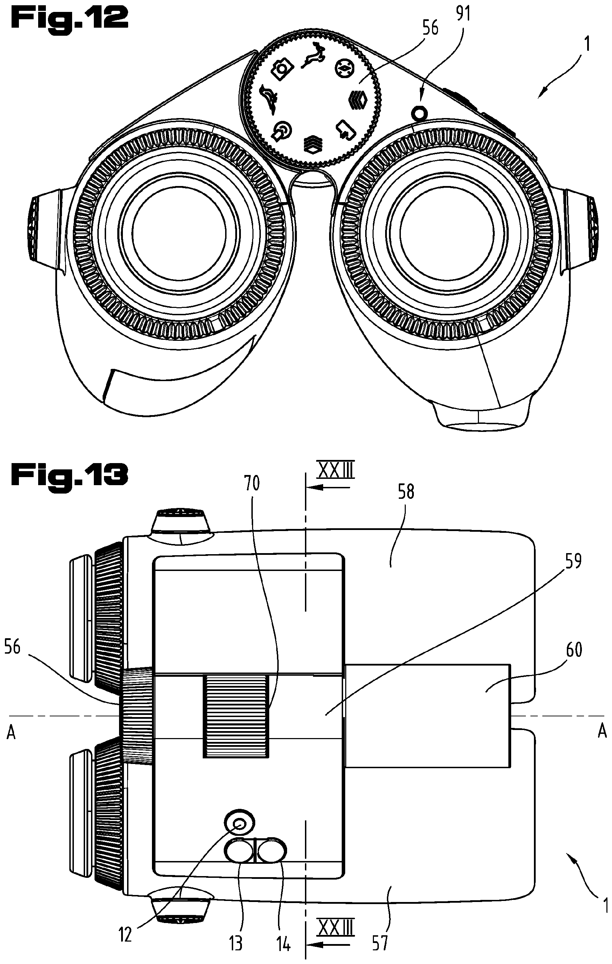

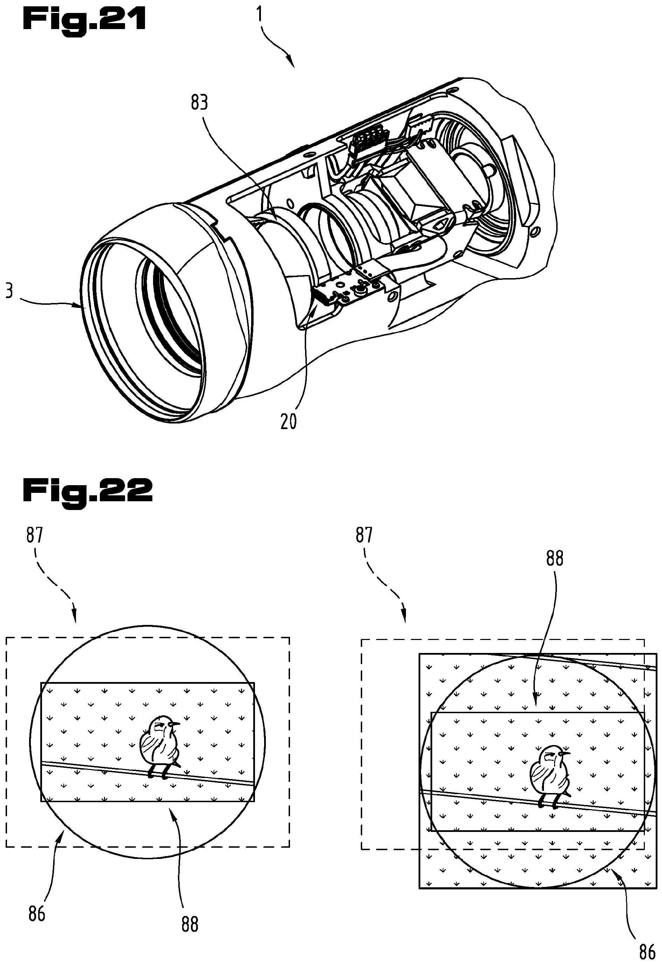

Die Fig. 21 zeigt ein Detail des Sichtkanals 3 des Fernrohrs 1 nach dem Ausführungsbeispiel gemäß Fig. 12, teilweise geschnitten und perspektivisch dargestellt. Mit dem Sensor 20 kann ein Ausmaß der Verschiebung der Fokussierlinse 83 erfasst werden. Der durch einen Linearsensor gebildete Sensor 20 ist auf einer Platine verlötet. Er ist einerseits am Gehäuse des Sichtkanals 2 über zwei Passstifte ausgerichtet und mit einer Schraube am Gehäuse befestigt. Andererseits greift ein Stößel des Linearsensors in eine Nut der Fassung der Fokussierlinse 83 ein und wird dieser bei der Fokussierbewegung mitgenommen. Die relative Verschiebung kann aus dem Sensor 20 elektronisch ausgelesen werden. Der Sensor 20 ist dazu durch ein lineares Schiebe-Potentiometer gebildet. Je nach Position der Fokussierlinse 83 - und damit der Position des Stößels des Sensors 20 - ergibt sich im Potentiometer ein spezifischer Widerstand, der über eine elektronische Schaltung ausgelesen und digitalisiert wird. Bei der Herstellung des Fernrohrs 1 ist beim Einbau in das Gerät eine entsprechende Kalibrierung erforderlich.

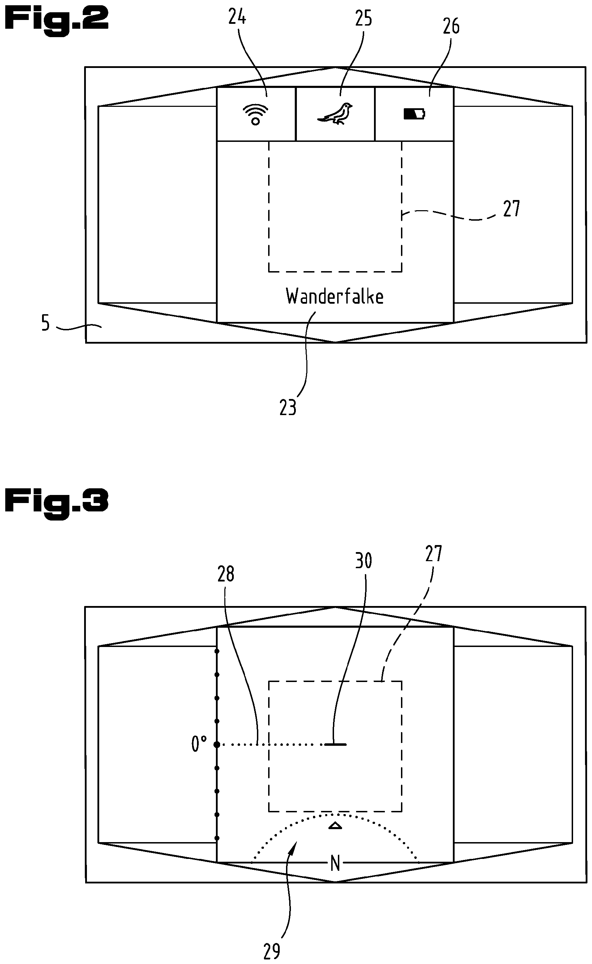

Für sehr weit entfernt liegende Objekte verlaufen die Strahlengänge des Kamerakanals und des Sichtkanals 2 bzw. der Sichtkanäle 2, 3 annähernd parallel, sodass die Bildmitte des Kamerabildes bei Scharfstellung auf ein weit entferntes Objekt der Bildmitte 30 des Bildes des Sichtkanals 2, 3 entspricht (Fig. 3). Bei Betrachtung eines in geringerer Entfernung liegenden Objektes ergibt sich aber ein Unterschied der Lagen der Bildmitten zwischen dem Sichtkanal 2 und dem Kamerakanal. Zur Veranschaulichung dessen sind in der Fig. 22 die beiden Situationen, ein Objekt im Unendlichen (linke Darstellung) und andererseits das Objekt im Nahbereich befindlich (rechte Darstellung), einander gegenübergestellt.

Die Fig. 22 zeigt zwei Bilder des Sehfelds, wie sie einem Benutzer beim Blick durch die Sichtkanäle 2 des Fernrohrs 1 erscheinen. Diesen Bildern überlagert ist einerseits ein durch einen Kreis angedeuteter Sehfeldrand 86 des Sichtkanals 2 und andererseits ein Sehfeldrand 87 des Bilderfassungssensors der Kamera 4. Im Unterschied zu der Situation "Objekt im Unendlichen" (linke Darstellung) zeigt sich in der Situation "Objekt im Nahbereich" (rechte Darstellung) eine Verschiebung des Sehfelds 87 des Bilderfassungssensors relativ zum Sehfeld 86 des Sichtkanals 2. Zusätzlich ist auch noch ein Rand 88 des Diplays 5 dargestellt. Diese Abweichung wird umso größer, je näher das betrachtete Objekt liegt und wird verursacht durch den bauartbedingten Versatz der beiden Kanäle zueinander (Parallaxe). Die dementsprechende Abweichung der Bildmitten führt zu Anwendungsfehlern, wenn zum Beispiel Bilder mittels eingeblendeter Markierungen zentriert und aufgenommen werden. Ebenfalls ist eine Korrektur notwendig bei einem auf einen bestimmten Bildbereich beschränkten Autofokus oder einer Belichtungskorrektur oder bei Anwendungen, welche im Sichtkanal 2, 3 dem betrachteten Bild durch Einblendung objektgebundene Informationen überlagern oder zuordnen. Aus diesem Grund ist es vorteilhaft, wenn das Fernrohr 1 dazu eingerichtet ist, eine relative Lage einer Bildmitte eines Kamerabilds relativ zu der Bildmitte 30 eines in dem zumindest einen Sichtkanal 2 dargestellten Bildes anhand einer Verschiebung der Fokussierlinsen 83, 76 (Fig.17, 20, 21) zu ermitteln und eine Bildmittenabweichung zu korrigieren (Parallaxekorrektur). Anhand der Lage der Fokuslinsen 83, 76 lässt sich nämlich recht einfach auf den Abstand des betrachteten und darauf fokussierten Objektes zum Fernrohr 1 rückschließen und daraus die Parallaxe bedingte Verschiebung berechnen. Abhängig von der Stellung der Fokussierlinsen kann somit ein Bereich des Kamerabildes so weit verschoben werden, dass die Bildmitte des verschobenen Kamerabereiches wieder der Bildmitte des Bildes im Sichtkanal 2, 3 entspricht. Hierbei ist es von Vorteil, dass die Fokussierlinsen des Sichtkanals 2, 3 und des Kamerakanals miteinander gekoppelt und nur gemeinsam verschiebbar sind.

Darüber hinaus kann das Fernrohr 1 mindestens eine Schnittstelle 21 zur Datenübertragung an ein externes Gerät, insbesondere ein Mobilfunkgerät oder an ein zweites Fernrohr 1 aufweisen. Bevorzugt ist die Schnittstelle 21 eine Schnittstelle zur drahtlosen Datenübertragung. Das Fernrohr 1 kann jedoch auch eine Datenschnittstelle für einen drahtgebundenen Datenaustausch, beispielsweise eine USB-Schnittstelle, aufweisen. Weiters kann das Fernrohr 1 ein WLAN-Modul und/oder ein Mobilfunkmodul, beispielsweise ein GSM-Modul, und/oder ein Bluetooth-Modul oder ein NFC-Modul aufweisen. Über eine Drahtlosverbindung des femoptischen Geräts 1 mit einem elektronischen Endgerät können Parameter und/oder Funktionen von dem elektronischen Endgerät an das fernoptische Gerät 1 übertragen werden und vice versa.

Darüber hinaus kann das Fernrohr 1 einen oder mehrere Speicher 22, auf welchen die Steuerung 7 zugreifen kann, aufweisen. In einem Teilbereich dieses Speicher 22 können beispielsweise Bilder abgelegt sein, während in anderen Teilbereichen Anwendungsprogramme gespeichert sein könne, die bei Bedarf in einen Arbeitsspeicher der Steuerung 7 geladen werden können. Auch können Teilbereiche des Speichers 22 von den Sensoren 16, 17, 18, 19, 20 aufgezeichnete Daten enthalten.

Weiters können in dem Speicher 22 benutzer- und/oder themen- und/oder ortsspezifischen Informationen, insbesondere Informationen zu lokal vorkommenden Tierarten und/oder Flurbezeichnung und/oder Bergnamen und/oder POIs abgelegt sein. Alternativ oder zusätzlich zur Speicherung der soeben genannten Informationen in dem internen Speicher 22 kann es aber auch vorgesehen sein, dass das Fernrohr 1 über eine Datenverbindung, beispielsweise über eine drahtlose Datenverbindung, mittels der Schnittstelle 21 diese Informationen aus einem externen Speicher, beispielsweise einem Server, abruft.

Ferner kann das Fernrohr 1 dazu eingerichtet sein, Objekte in von der Kamera 4 aufgenommenen Bildern zu erkennen. Hierzu kann ein entsprechendes Bilderkennungsprogramm von der Steuerung 7 ausgeführt werden. Beispielsweise kann anhand von in dem Speicher 22 abgelegten Daten ermittelt werden, um welches Objekt es sich handelt.

Die Steuerung 7 steuert, die Anzeige der auf dem Display 5 dargestellten Informationen. So kann, wie in Fig. 2 dargestellt, auf dem Display 5 sobald ein Objekt erkannt ist, die Bezeichnung 23 dieses Objekts angezeigt werden. Weiters können auch Icons 24, 25, 26 für gerade aktivierte Einstellungen oder Statusanzeigen angezeigt werden.

Wie aus Fig. 2 weiters erkennbar ist, wird nur ein Randbereich des Displays 5 zur Darstellung zusätzlicher Informationen verwendet, um dem Benutzer ein möglichst unbeeinträchtigtes Beobachten zu ermöglichen. In der Fig. 2 ist eine Grenze 27 dieses Randbereichs des Displays 5 durch einen strichliert dargestellten Rahmen nur angedeutet. Das Fernrohr 1 ist dazu eingerichtet, dass sobald ein Objekt sich innerhalb dieser inneren Grenze 27 des Displays 5 befindet eine Bilderkennung ausgelöst werden kann. Dies wird beispielsweise durch Betätigen eines der Bedienelemente 12 bis 15 bewirkt. Alternativ kann natürlich auch eine automatische Auslösung der Bilderkennung erfolgen, sobald ein Objekt sich innerhalb der Grenze 27 befindet.

Die auf dem Display 5 dargestellten Informationen können, von der aktuell ausgewählten und ausgeführten Funktion des Fernrohres 1 abhängen.

Wie in Fig. 3 gezeigt, können in einem bestimmten Modus beispielsweise Informationen 28 bezüglich der Neigung des Fernrohres und Kompassdaten 29 auf dem Display 5 dargestellt und dem Bild des betrachteten Objekts überblendet werden.

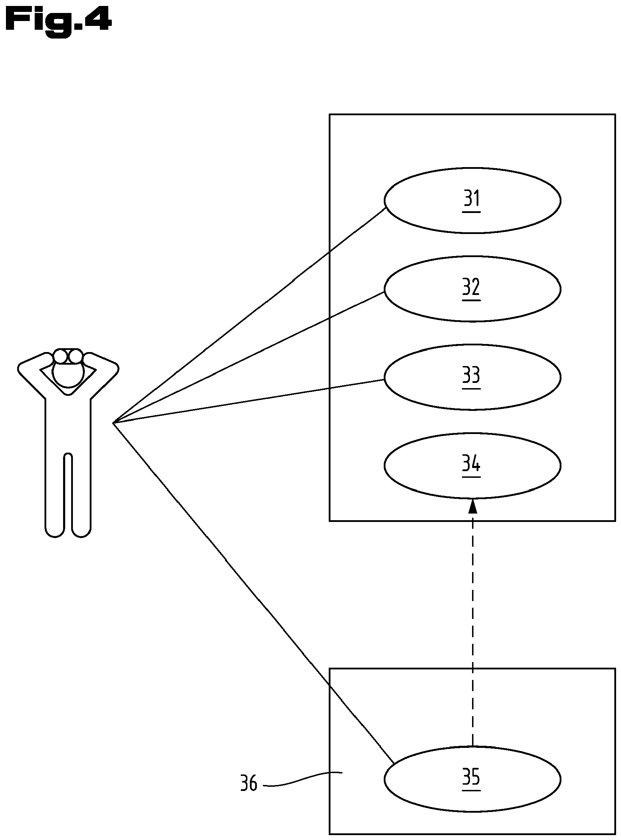

Wie in Fig. 4 dargestellt, hat der Benutzer die Möglichkeit, unterschiedliche Einstellungen direkt am Fernrohr 1 aufzurufen und zu ändern. So kann er beispielsweise in einem Menü, welches ihm am Display 5 angezeigt wird (Fig. 2), einen Menüpunkt 31 zur Benutzung einer Orientierungsunterstützung aufrufen. In einem Menüpunkt 32 kann er beispielsweise auswählen, dass er die Kompasseinstellungen ändern möchte. In einem Punkt 33 kann er die Kalibrierung des elektronischen Kompasses auswählen bzw. aktivieren. Die Eingabe einer Deklination kann beispielsweise wiederum in einem Punkt 34 ausgewählt werden. Die Eingabe der Deklination erfolgt vorteilhafterweise über ein entsprechendes Eingabefeld 35 eines mit dem Fernrohr 1 gekoppelten Smartphones 36. Die Verwendung des Smartphones 36 ist insofern günstig, da die Eingabe komplexerer Zeichenfolgen dadurch erleichtert wird.

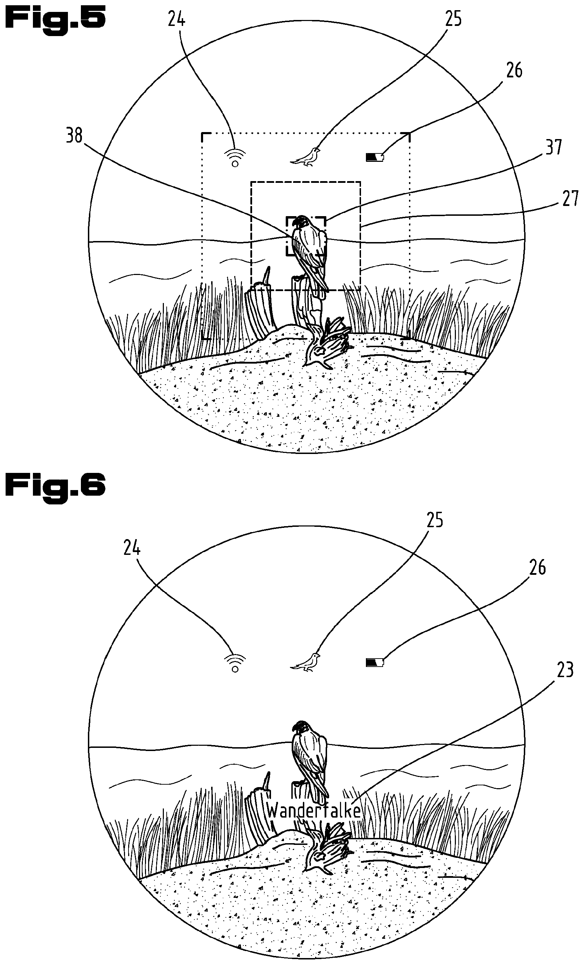

In Fig. 5 und 6 ist ein Beispiel für die Erfassung und Erkennung eines teilweise in einem innerhalb der Grenze 27 angeordneten Rahmen 37 liegenden Objektes 38, in Form eines Falken, dargestellt. Das über dem Objekt 38 eingeblendeten Icon 24 zeigt dem Benutzer an, dass die Funktion drahtlose Verbindung (WLAN, Bluetooth, etc.) aktiviert ist. Das Icon 25, in Form eines Vogels, bedeutet, dass ein Vogelerkennungsmodus aktuell aktiv ist. Ein Ladestand des Energiespeichers 11 wird über das Icon 26 angezeigt.

Die Grenze 27 und der Rahmen 37 erleichtern es dem Benutzer das Fernrohr 1 so zu bewegen, dass das Objekt 38 in einer Bildmitte zu liegen kommt. Durch Betätigen eines Betätigungselementes, beispielsweise eines der Betätigungselemente 12 - 15, insbesondere in Form einer Taste kann der Benutzer unterschiedliche Funktionen aktivieren.

Welche Funktion ausgeführt werden können von der Betätigungsdauer und der Kraft, mit der das Betätigungselement betätigt wird, abhängen. So kann beispielsweise bei einem leichten Druck auf das Betätigungselement der Rahmen 37 eingeblendet werden. Bei Verstärken des Drucks kann dann beispielsweise ein Foto aufgenommen werden. Oder bei zweimaligem Drücken eine Videoaufnahme gestartet werden. Eine weitere Möglichkeit wäre, dass in Abhängigkeit von Druck und Dauer des Betätigungselementes eine Objekterkennung ausgelöst wird.

Zur Ermittlung einer Betätigungsdauer kann das Betätigungselement eine erste Messvorrichtung aufweisen, wobei bei einer ersten Betätigungsdauer eine erste Funktion ausführbar ist und bei einer zweiten, von der ersten Betätigungsdauer unterschiedlichen Betätigungsdauer eine zweite, von der ersten Funktion unterschiedliche Funktion ausführbar ist.

Zur Ermittlung eines Zeitintervalls zwischen den Betätigungen des Betätigungselements umfasst das Betätigungselement eine Messvorrichtung, wobei bei einer ersten Betätigungsdauer, zumindest einem ersten Zeitintervall und zumindest einer zweiten Betätigungsdauer eine erste Funktion ausführbar ist und bei einer dritten Betätigungsdauer, zumindest einem zweiten Zeitintervall und zumindest einer vierten Betätigungsdauer eine zweite, von der ersten Funktion unterschiedliche Funktion ausführbar ist.

Zur Ermittlung einer Betätigungskraft umfasst das Betätigungselement eine weitere Messvorrichtung, wobei bei einer ersten Betätigungskraft eine erste Funktion ausführbar ist und bei einer zweiten, von der ersten Betätigungskraft unterschiedlichen Betätigungskraft eine zweite, von der ersten Funktion unterschiedliche Funktion ausführbar ist.

Sobald sich das Objekt 38 oder ein für die Erkennung wesentlicher Teil des Objekts 38 in der für eine Objekterkennung optimale Position innerhalb des Rahmens 37 befindet, wird die Objekterkennung durchgeführt, ausgelöst durch den Benutzer oder automatisch bei entsprechender Voreinstellung.

In Fig. 6 ist dargestellt, was der Benutzer sieht, wenn er nach erfolgter Objekterkennung durch das Okular durch den Sichtkanal 2, 3 blickt. Unterhalb des Objektes 38 wird die Bezeichnung 23 des Vogels eingeblendet, während oberhalb des Objektes eine Statusleiste mit den Icons 24, 25, 26 eingeblendet wird.

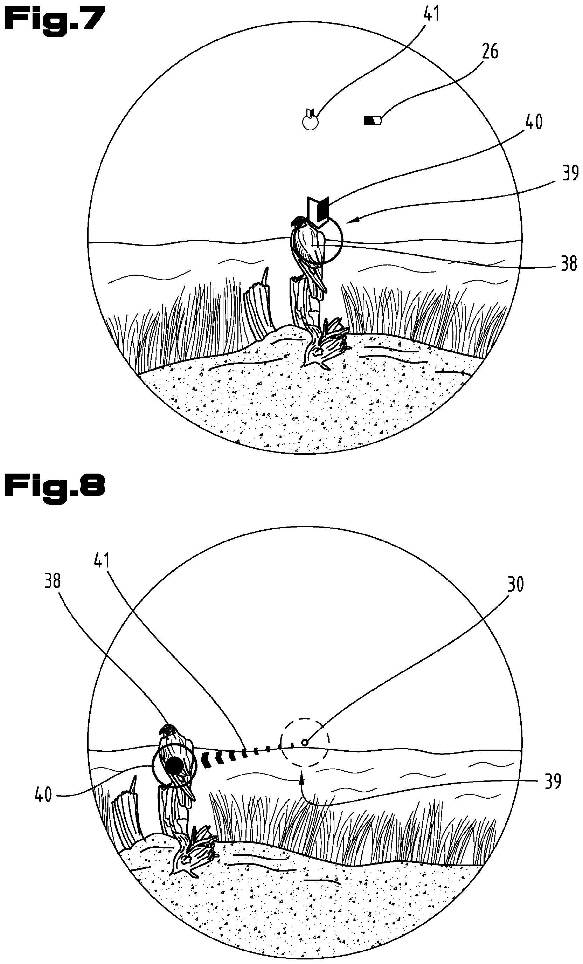

Fig. 7 und Fig. 8 zeigen eine Ausführungsform der Erfindung, bei welcher das Objekt 38, welches teilweise innerhalb eines Bereichs 39 um die Bildmitte 30 liegt, mit einer virtuellen Markierung 40 versehen wird. Hierbei wird die räumliche Ausrichtung des Fernrohres 1 in einer aktuellen Position, in der es das Objekt 38 abbildet, erfasst und gespeichert. Der virtuellen Markierung 40 kann somit eine bestimmte Lage (Ausrichtung und Position) des Fernrohres 1 zugeordnet werden. Befindet sich das markierte Objekt 38 außerhalb der Bildmitte 30 bzw. des Bereichs 39, insbesondere außerhalb des Sehfeldes des Betrachters, so kann der Abstand zwischen virtueller Markierung 40 und Bildmitte 30 mittels Anzeigeelementen 41, insbesondere in Form von Pfeilen, angezeigt werden.

Die Ermittlung der aktuellen Ausrichtung des Fernrohrs erfolgt dabei über in das Fernrohr eingebaute Sensoren, welche dazu geeignet sind, die aktuelle Orientierung und Neigung der optischen Achse eines Sichtkanals, insbesondere des Sichtkanals mit Displayeinspiegelung, zu ermitteln. Dies kann zum Beispiel über einen elektronischen Kompass und einem Neigungssensor erfolgen. Typerweise weisen handelsübliche elektronische Kompasse aber Ungenauigkeiten im Bereich von ±5-10° auf und sind deshalb nur beschränkt einsetzbar. Besser geeignet sind kombinierte Sensoren zur relativen Ausrichtungsmessung, welche aus einer Fusion mehrerer unterschiedlicher Sensoreinheiten, zum Beispiel aus der Fusion eines dreiachsigen Gyrosensors mit einem dreiachsigen Beschleunigungssensors, viel genauere Ergebnisse liefern.

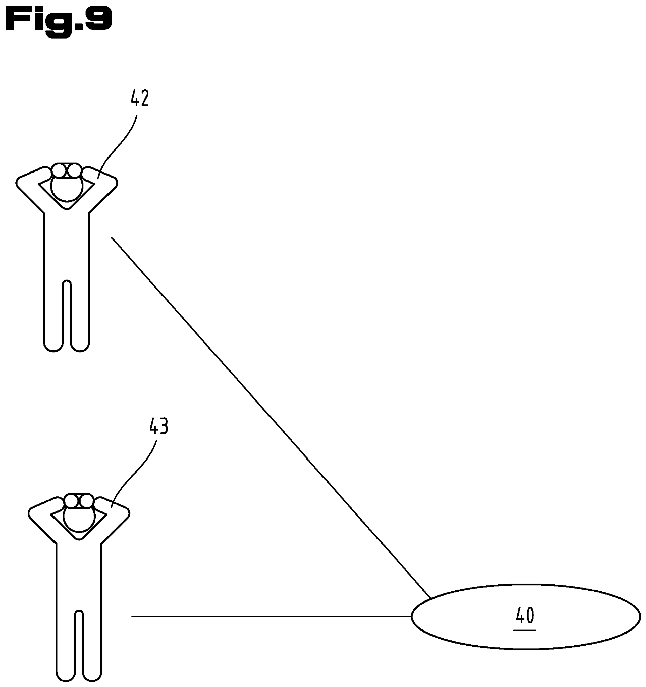

Das Setzen der virtuellen Markierung 40 und das Einblenden von Anzeigeelemente 41, die auf die virtuelle Markierung 40 verweisen, ermöglicht es aber auch, bei Weiterreichen des Fernrohres 1 von einem Benutzer 42 an einen anderen Benutzer 43, beispielsweise an eine nebenstehende Person, dass diese Person auf einfache Weise zu der virtuellen Markierung 40 geleitet werden kann (Fig. 9). Das Objekt 38 kann durch Anzeigen einer Richtung, in der sich die virtuellen Markierung befindet, sehr schnell von der Person, der das Fernrohr 1 weitergereicht wurde, gefunden werden.

Dass sich das Fernrohr 1 in einem Modus befindet, in dem das Setzen der virtuellen Markierung 40 möglich ist, wird dem Benutzer in Fig. 8 durch das Icon 41 im eingeblendeten Statusbalken angezeigt.

Weiters kann ein Sehfeld der Kamera 4 bzw. des Kamerakanals größer sein als ein Sehfeld des Sichtkanals 2, 3. Ein vom Bilderfassungssensor der Kamera 4 erfasster feldseitiger Bildausschnitt ist größer als ein von dem Sichtkanal 2, 3 erfasster feldseitiger Bildausschnitt. Dies ermöglicht zum einen eine Verschiebung der Bildmitte des Kamerabildes im Rahmen der bereits zuvor erwähnten Bildmittenkorrektur als auch die Erfassung von Details oder Objekten, die außerhalb des Sehfeldes des Beobachters liegen, wenn er durch den Sichtkanal 2, 3 hindurchblickt. Dies eröffnet die Möglichkeit, dem Beobachter einen entsprechenden Hinweis einzublenden, wenn außerhalb seines Sehfeldes mittels automatischer Objekterkennung ein interessantes Objekt erkannt wird.

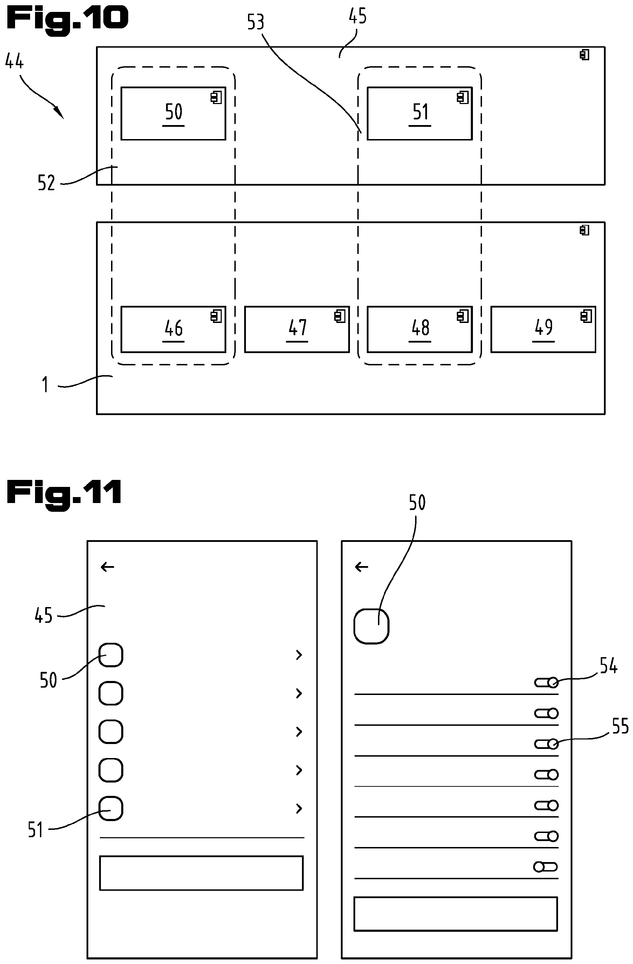

Das in Fig. 10 dargestellte Beobachtungs- und Bilderfassungssystem 44 umfasst das Fernrohr 1 mit darauf installierten Anwendungsprogrammen 46, 47, 48, 49, und ein externes Endgerät 45, beispielsweise in Form eines Smartphones. Auf einen Teil der Anwendungsprogramme 46, 47, 48, 49, die auf dem Fernrohr 1 installiert sind, kann das externe Endgerät 45 über eine Verbindung bzw. Drahtlosverbindung zugreifen und vice versa.

Auf dem Endgerät 45 sind dabei ebenfalls Anwendungsprogramme 50 und 51 installiert. Die auf dem Endgerät 45 installierten Anwendungsprogramme 50, 51 wirken mit auf dem Fernrohr 1 installierten Anwendungsprogrammen 46 und 48 zusammen. Die Anwendungsprogramme 50 und 46 sowie 51 und 48 bilden je ein kombiniertes Anwendungsprogramm 52, 53. Parameter und/oder Funktionen der Anwendungsprogramme 46, 48 können dabei mittels der Anwendungsprogramme 50, 51 auf dem Endgerät 45 erstellt oder editiert werden, wobei Parameter und/oder Funktionen von dem Endgerät 45 an das Fernrohr 1 übertragbar sind und vice versa.

Bei dem Beobachtungs- und Bilderfassungssystem 44 ist zusätzlich auch noch vorgesehen, dass für den Zugriff von den Anwendungsprogrammen 50, 51 des externen Endgeräts 45 auf die Anwendungsprogramme 46, 47, 48, 49 des Fernrohrs 1 Programmierschnittstellen (API) zur Verfügung gestellt werden. Insbesondere kann eine Gruppierung von mehreren Programmierschnittstellen für spezifische Anwendungsfälle vorgesehen sein. Dazu kann auch noch die für den jeweiligen Verwendungsfall des Fernrohrs 1 nötige Übertragungstechnologie für die Kommunikation zwischen dem Fernrohr 1 und dem externen Endgerät 45 spezifiziert werden. Das Anwendungsprogramm 50, 51 auf dem externen Endgerät 45 besitzt außerdem einen Key, mit Hilfe dessen geregelt wird, auf welchen Satz aus Programmierschnittstellen-Gruppe und zugehöriger Übertragungstechnologie es zugreifen darf. So ist vorgesehen, dass die Kommunikation primär über BLE (Bluetooth Low Energy) erfolgt, um dadurch Strom zu sparen. Bei einem Verwendungsfall eines Anwendungsprogramms 50, 51 des externen Endgeräts 45, für den Wifi benötigt wird, wird die gesamte Kommunikation über WiFi ausgeführt und BLE bleibt nur als Backup Verbindung erhalten.

Das Beobachtungs- und Bilderfassungssystem 44 des Fernrohrs 1 ist insbesondere dazu eingerichtet, gemeinsame Funktionalitäten nach außen hin (zu den Anwendungsprogrammen 50, 51 des externen Endgeräts 45 hin) bereitzustellen. Und zwar wird je nach dem gerade gestarteten Anwendungsprogramm 46, 47, 48, 49 des Fernrohrs 1 eine dementsprechende Funktionalität bereitgestellt und wird das Anwendungsprogramm 50, 51 des externen Endgeräts 45 davon benachrichtigt. Das Beobachtungs- und Bilderfassungssystem 44 des Fernrohrs 1 sorgt auch für eine Berechtigungsverwaltung zu den Sätzen aus Programmierschnittstellen-Gruppe und zugehöriger Übertragungstechnologie. Ebenso wird ein entsprechendes Verbindungsmanagement (WiFi oder BLE) ausgeführt.

Hinsichtlich der Möglichkeit, dass Bilder in dem Speicher 22 des Fernrohrs 1 abgelegt werden können (Fig. 1), ist die Steuerung 7 derart programmiert, dass nach erfolgreicher Übertragung eines Bildes auf das externe Endgerät 45 dieses Bild automatisch vom Speicher 22 gelöscht wird. Ein separater Eingriff des Benutzers ist dazu nicht erforderlich. Dadurch kann der Speicher 22 sehr ökonomisch genutzt werden. Zusätzlich kann auch noch vorgesehen sein, dass - wenn bereits während der Aufnahme eine Verbindung mit dem externen Endgerät 45 besteht - das Bild automatisch an letzteres übertragen wird. Diese Funktionalität kann im Übrigen auch für mehrere Clients gleichzeitig (mehrere Endgeräte 45) vorgesehen sein.

In Fig. 11 ist ein Bildschirm des mobilen Endgerätes 45 mit mehreren Anwendungsprogrammen 50, 51, die zusammen mit auf dem Fernrohr 1 installierten Anwendungsprogrammen 46, 47 die kombinierten Anwendungsprogramme 52, 53 bilden. Durch Aufrufen eines Untermenüs können dann beispielsweise Parameter 54, 55 eines der kombinierten Anwendungsprogrammes 52, 53 verändert werden.

Parameterauswahl und/oder Funktionseinstellungen können dabei in einer nicht näher dargestellten Ausführungsform von einem Endgerät 45 auch an eine Mehrzahl von Fernrohren 1 übertragen werden und vice versa.

Bei den Funktionseinstellungen kann es sich beispielsweise um das Einschalten des Fernrohres 1, das Ausschalten des Fernrohres 1, das Koppeln des Fernrohres 1 mit dem Endgerät 45, das Herunterladen von aufgenommenen Bildern oder Videos von dem Fernrohr 1, die Aufnahme eines Bildes die Aufnahme einer Bildsequenz bzw. eines Videos, welche durch die Betätigung des Betätigungselements ausgeführt bzw. gestartet werden, etc. handeln.

Die Auswahl einer Mehrzahl aus der Gruppe von Parametern und Funktionen kann dabei unmittelbar nacheinander erfolgen. Der Programmablauf einer Mehrzahl von ausgewählten Funktionen kann weitgehend parallel erfolgen oder aber auch zeitversetzt.

Bei einem ersten kombinierten Anwendungsprogramm 52 kann es sich um eine erste mobile Applikation handeln, welche die Funktionen Live-Streaming, Bildverwaltung und Einspielung von Updates für die Firmware des Fernrohres 1 bietet. Bei dem Live-Streaming handelt es sich dabei um eine Echtzeitübertragung eines mittels der Kamera 4 aufgenommenen Bildes oder Videos an das gekoppelte Endgerät 45. Dabei ist es auch möglich, nicht nur ein einziges, sondern gleich mehrere Endgeräte zu koppeln, sodass mehrere Personen gleichzeitig den Livestream betrachten können.

Bei einem zweiten kombinierten Anwendungsprogramm 53 kann es sich um eine Identifizierungsapplikation für Vögel handeln. Anhand eines mittels der Kamera 4 aufgenommenen Bildes eines Vogels, welches an das elektronische Endgerät 45 übertragen wird, kann die Art des Vogels mittels einer nicht näher dargestellten Bilddatenbank und einem Bilderkennungsalgorithmus erkannt werden. In weiterer Folge kann die Art des Vogels auf einer Anzeigevorrichtung des elektronischen Endgeräts 45 ausgegeben werden. Hierbei ist es weiterhin denkbar, dass Zusatzinformationen, wie eine Beschreibung der Art, eine Vogelstimme und/oder eine Darstellung des geografischen Vorkommens auf dem mobilen Endgerät 45 ausgegeben werden.

Bei einem derartigen Programm zur Vogelerkennung kann es sich aber auch um ein nur auf dem Fernrohr 1 vorhandenes Anwendungsprogramm 47, 49 handeln, welches autonom und unabhängig von dem externen Endgerät 45 funktioniert und die Vogelerkennung durchführt.

Bei einer dritten mobilen Applikation 51, 52, die ebenfalls mittels eines kombinierten Anwendungsprogrammes oder mittels eines autonom funktionierenden, auf dem Fernrohr installierten Anwendungsprogrammes 47, 49 realisiert sein kann, kann es sich um eine Identifizierungsapplikation für Berge handeln, wobei anhand eines aufgenommenen Bildes von Bergen, die Namen der Berggipfel ausgegeben werden.

Mittels einer vierten mobilen Applikation, die mittels eines kombinierten Anwendungsprogrammes 50, 51 realisiert sein kann, ist es weiterhin denkbar, dass ein aufgenommenes Bild oder eine Bildsequenz bzw. ein Video mit einer zweiten Bedienperson geteilt wird, wobei eine Übertragung an ein nicht näher dargestelltes zweites elektronisches Endgerät erfolgt.

Die Anwendungsprogramme 50, 51 des Endgerätes 45 und die Anwendungsprogramme 46, 47, 48, 49 des Fernrohres 1 lassen sich bevorzugt auch durch Herunterladen von einem externen Server installieren.

Gemäß Fig. 12 weist das Fernrohr 1 ein, bevorzugt an einer benutzerseitigen Stirnseite des Fernrohres 1 angeordnetes, Moduswahlrad 56 zum Aufrufen zumindest einer Funktion des Fernrohres 1 auf. In unterschiedlichen Stellungen des Moduswahlrades 56 sind unterschiedliche Funktionen aufgerufen. Es wird aktuell die Funktion aufgerufen, deren Icon sich nach Drehen des Moduswahlrades an einer definierten Referenzstelle befindet. Durch Weiterdrehen des Moduswahlrades 56 wird eine andere Funktion aufgerufen. Zumindest eine Position des Moduswahlrades 56 bzw. eine Stellung des Moduswahlrades ist für eine von einem Benutzer frei wählbare Funktion vorgesehen. Der Benutzer kann beispielsweise über das Endgerät 45 auf ein Programm zur Zuweisung von Funktionen zugreifen und der frei belegbaren Stelle des Moduswahlrades 56 eine von ihm bevorzugte Funktion zuweisen. Neben der Festlegung von Einstellungen, Funktionen oder sonstigen Parametern und Übertragung vom Endgerät 45 an das Fernrohr 1 ist es auch möglich, , dass alle Einstellungen an dem Fernrohr 1 auch ohne Zuhilfenahme des Endgerätes 45 vorgenommen werden können. Dem Benutzer können dann die entsprechenden Informationen auf dem Display 5 eingeblendet werden. Eine Auswahl der Funktionen und Programme kann beispielsweise mittels Betätigungselement des Fernrohrs 1 erfolgen. An der benutzerseitigen Stirnseite des Fernrohres 1, dem Moduswahlrad 56 benachbart, ist eine (farbige) Status-LED 91 zur Anzeige von unterschiedlichen Betriebs-Modi des Fernrohrs 1 angeordnet. Für einen Benutzer ist es damit möglich, Betriebszustände auch ohne durch die Sichtkanäle 2, 3 zu blicken erkennen zu können.

Wie aus Fig. 13 ersichtlich ist, kann das Fernrohr 1 als Binokular ausgeführt sein. mit einem ersten Tubus 57 und mit einem zweiten Tubus 58, wobei durch den ersten Tubus 57 der erste Sichtkanal, der in Fig. 1 mit 2 bezeichnet ist, und durch den zweiten Tubus 58 der zweite, in Fig. 1 mit 3 bezeichnete Sichtkanal verläuft.

Die beiden Tuben 57, 58 sind durch eine Gelenkbrücke 59 miteinander verbunden. Zur Einstellung eines Augenabstands sind die beiden Tuben 57, 58 um eine Gelenkachse der Gelenkbrücke 59 schwenkbar.

Weiters ist ein den Kamera-Strahlengang enthaltender Kamera-Tubus 60 vorgesehen. Der Kamera-Tubus 60 bildet hierbei die Gelenkachse der Gelenkbrücke 59.

Zur Fokussierung weist das Fernrohr 1 einen Fokussierring 70 auf. Vorteilhafterweise befindet sich der Schwerpunkt des Fernrohres 1 im Bereich des Fokussierringes 70, wodurch sich eine besonders gute Handhabung erzielen lässt.

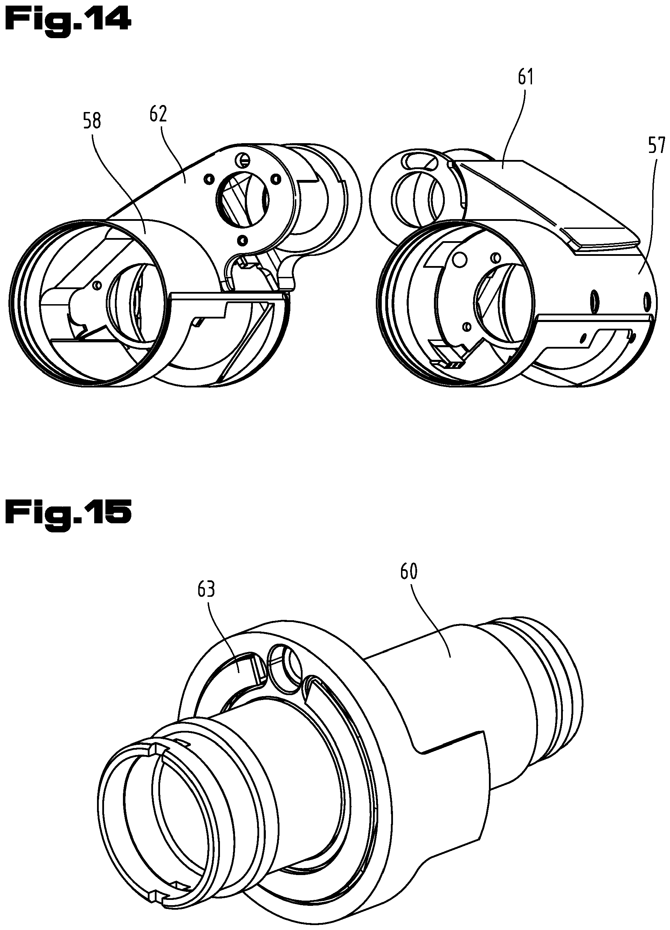

Wie aus Fig. 14 erkennbar ist, weist die Gelenkbrücke 59 einen ersten, mit dem ersten Tubus 57 fest verbunden Gelenkteil 61 und einen zweiten, mit dem zweiten Tubus 58 fest verbundenen Gelenkteil 62 auf. Die beiden Gelenkteile 61 und 62 sind durch den in Fig. 15 dargestellten Kamera-Tubus 60 miteinander verbunden.

Der erste Gelenkteil 61 des ersten Tubus 57 und der zweite Gelenkteil 62 des zweiten Tubus 58 liegen an einer Mantelfläche des Kamera-Tubus 60 an. Eine geometrische Knickachse der beiden Tuben 57 und 58 verläuft innerhalb des Kamera-Tubus 60. Die Knickachse und eine optische Achse des Kamera-Strahlengangs sind koaxial zueinander angeordnet.

Der Kamera-Tubus 60 ist mit dem Tubus 57 fest verbunden und gemeinsam mit diesem verschwenkbar sein. Das Display 5 ist in einem der beiden Tuben 57, 58 angeordnet, bevorzugt in dem mit dem Kamera-Tubus 60 verbundenen Tubus.

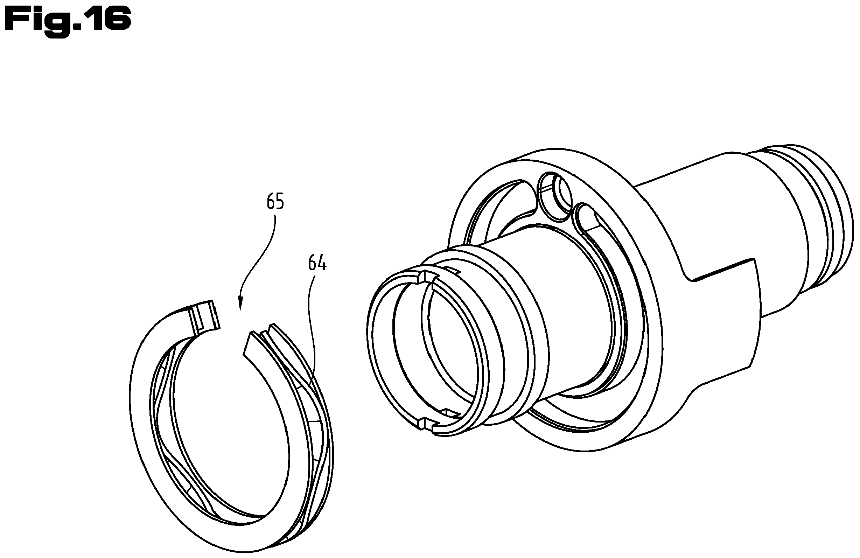

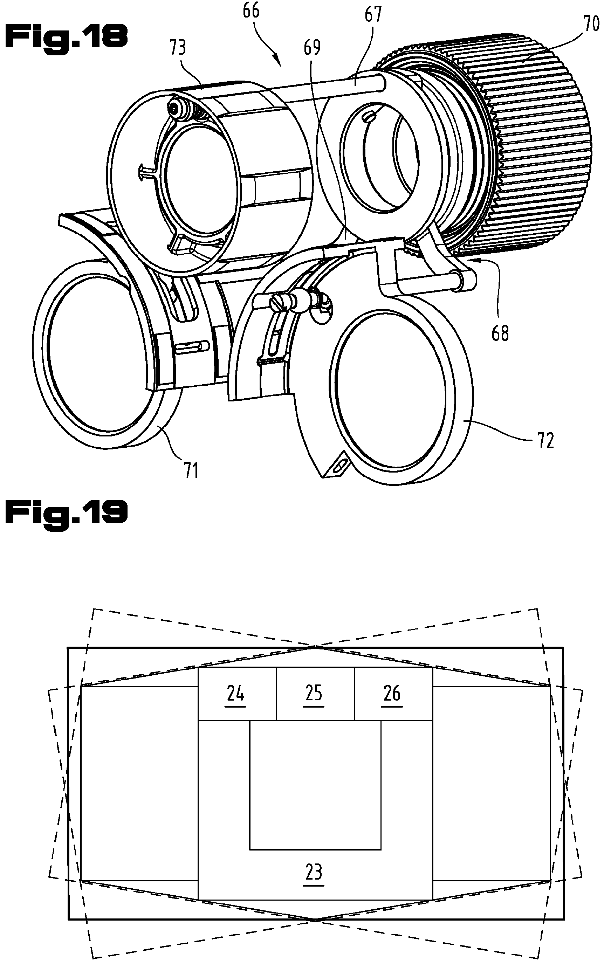

Zur Erzeugung eines Schwenkwiderstandes zwischen dem ersten Gelenkteil 61 und dem zweiten Gelenkteil 62 kann der Kamera-Tubus 60 mit einer Federanordnung 63 ausgebildet sein, wie dies in den Figuren 15 und 16 dargestellt ist. Die Federanordnung 63 ist um den Kamera-Strahlengang herum angeordnet und umfasst eine Wellenfeder 64. Die Federanordnung 63 weist eine Durchbrechung 65 auf, durch welche die Schubstange (Bezugszeichen 67 in Fig. 17 und 18) zum Verschieben einer Fokussierlinse (Bezugszeichen 76 in Fig. 17) des Kamera-Strahlengangs verläuft. Ein in Richtung des Objektivs aus einem den Kamera-Tubus 60 umgebenden Elements mit einer Durchtrittsöffnung für die Schubstange, vorstehender Abschnitt der Federanordnung 63 stützt sich in einem montierten Zustand gegen einen Abschnitt des Gelenkteils 61 ab und erzeugt bei Knicken der beiden Tuben 57, 58 einen Schwenkwiderstand.

Fig. 17 zeigt das optische System des Kamerakanals. An dieser Stelle sei angemerkt, dass insofern in weiterer Folge von "Linsen" wie einer Okularlinse, einer Objektivlinse oder einer Fokussierlinse die Rede ist und der Begriff "Linse" in der Einzahl verwendet wird, dies nicht einschränkend zu verstehen ist, sondern dass damit auch ein System von mehreren Linsen gemeint ist bzw. gemeint sein kann. Dies ist in der technischen Optik zur Vermeidung bzw. Kompensation von Abbildungsfehlern allgemein üblich.

Der Kamerakanal weist objektseitig ein Deckglas 74 und anschließend an das Deckglas 74 ein Objektiv 75 und eine Fokussierlinse 76 sowie ein Okular 77 und ein Kameramodul 78 auf. Das Objektiv 75, die Fokussierlinse 76 und das Okular 77 des Kamerakanals bilden gemeinsam ein afokales Linsensystem. Das Kameramodul 78 wird vorzugsweise als Einheit mit einem elektronischen Bilderfassungssensor, einem eigenen Objektiv und mit einer integrierten Autofokusfunktion gebildet. Die Fokussierlinse 77 kann mittels der Schubstange 67 verschoben werden.

Fig. 18 zeigt Teile der Verstellmechanik 66 zur Bewegung der Fokussierlinsen des Kamera-Strahlengangs und der Sicht-Strahlengänge 2, 3. Die Verstellmechanik 66 weist eine Schubstange 67 und zwei Mitnehmer 68, 69 zum gemeinsamen Verschieben der Fokussierlinsen der Sichtkanäle 2, 3 und der Fokussierlinse des Kamerakanals auf.

Die Schubstange 67 der Verstellmechanik 66 ist mittels des ersten Mitnehmers 68 und des zweiten Mitnehmers 69 mit entsprechenden verschiebbaren Linsenfassungen 71, 72, 73 des Sichtkanals 2 bzw. 3 und des Kamerakanals gekoppelt. Über entsprechende Steuernuten (nicht dargestellt) kann der Fokussierring 70 bei dessen Betätigung auf die Verstellmechanik 66 derart einwirken, dass die Schubstange 67 parallel zu den optischen Achsen der Sichtkanäle 2, 3 und des Kamerakanals bewegt wird. Durch die Kopplung an die Schubstange 67 mittels der Mitnehmer 68, 69 werden schließlich die Fokussierlinsen der Sichtkanale 2, 3 einerseits und die Fokussierlinse des Bilderfassungskanals 3 andererseits in axialer Richtung verschoben. Der Fokussierring 70, die Schubstange 67 und die beiden Mitnehmern 68, 69 bilden somit eine Fokussiereinrichtung, mittels der die Fokussierlinse des Sichtkanals 2, 3 und die Fokussierlinse des Kamerakanals 3 gemeinsam verschiebbar sind.

Durch das gemeinsame Verschieben der Fokussierlinsen wird gleichzeitig auch eine axiale Verschiebung der Bildebenen des entfernten Objekts in dem Strahlengang des Kamerakanals bewirkt. Diese Verschiebung der Bildebenen in dem Kamerakanal hat die Wirkung einer Voreinstellung bzw. einer Grobeinstellung der Bildschärfe des Kamerakanals. Eine darauffolgende Feineinstellung der Bildschärfe wird schließlich durch eine Autofokusfunktion der Kamera 4 bzw. des Kameramoduls 78 bewirkt. Das durch die Autofokusfunktion des Kameramoduls 78 veränderbare Objektiv wird dazu automatisch so verstellt, dass auf der lichtempfindlichen Sensoroberfläche ein scharfes Bild des entfernten Objektes abgebildet wird.

Die automatisch erfolgende Scharfeinstellung des Bilds in dem Kamerakanal mit der Autofokusfunktion der Kamera 4 bzw. des Kameramoduls 78 wird vorzugsweise unmittelbar nach Betätigen des Betätigungselementes zum Auslösen einer Bildaufzeichnung gestartet. Das in Gang setzen der Autofokusfunktion der Kamera 4 kann aber alternativ auch programmgesteuert von der Steuerung 7 ausgelöst werden. Beispielsweise kann mit Hilfe von gegebenenfalls vorgesehenen Sensoren Bewegungen der Fokussierlinse von der Steuerung 7 überwacht werden. Bei Detektion eines Endes der Bewegung der Fokussierlinse kann die Autofokusfunktion ausgelöst werden. Die automatische Auslösung der Autofokussierung nach Beendigung einer manuellen Fokussierung hat weiters den Vorteil, dass bei Auslösung einer Bild/Videoaufnahme durch Betätigen der Bedientaste eine nochmalige Autofokussierung entfallen kann. Dadurch wird der gesamte Aufnahmevorgang deutlich beschleunigt, da die Zeit zwischen der Auslösung und der tatsächlichen Bildaufnahme merklich verkürzt wird.

Neben dem Scharfstellen der Optik des Fernrohrs 1 durch Fokussieren, im Sinne eines mechanischen Positionierens der optischen Elemente relativ zueinander, wie vorstehend im Zusammenhang mit der Beschreibung der Fig. 17 und 18 ausgeführt worden ist, wird bei der Aufzeichnung eines Bildes mit dem Kameramodul 78 der Kamera 4 die Bildqualität bzw. die Bildschärfe auch noch vom Bewegungszustand der Fernrohrs 1 zum Zeitpunkt der Aufnahme des Bilds beeinflusst.

Um mit einem handgehaltenen Fotoapparat oder einem Fernglas mit Kamera scharfe Aufnahmen erzielen zu können, muss die Belichtungszeit bei Standbildaufnahmen möglichst kurzgehalten werden. Die verwendeten Brennweiten bei Fernoptiken erschweren diese Problematik noch weiter. Dafür gibt es im Bereich der Fotografie die sogenannte Reziprok Regel, mit der sich überschlagsmäßig die Freihandgrenze ermitteln lässt: "Die Freihandgrenze besagt, dass wenn man mit einer Brennweite von 80 mm (Kleinbild Äquivalent) aufnimmt, die Verschlusszeit auf maximal 1/80 Sekunden eingestellt sein sollte." Bei der Optik des Fernrohrs 1 liegt diese Grenze bei etwa 1/250 Sekunden. Während der Dämmerung oder wenn Aufnahmen von Gegenständen unter schattigen Lichtverhältnissen gemacht werden sollen, wie am Waldrand oder in einem Wald, sind meist längere Belichtungszeiten nötig. Diese sogenannte Freihandgrenze ist allerdings nur eine grobe Richtschnur und wird die Bildqualität von weiteren Faktoren beeinflusst, wie der Kameraauflösung bzw. der Größe der Pixel, der Objektivqualität und der Handhaltetechnik, d.h. wie ruhig und stabil das Fernrohr 1 während der Aufnahme von dem Benutzer gehalten wird. Die Haltetechnik kann bei Benutzern von Ferngläsern zwischen Anfänger und Profi stark variieren.

Im Falle, dass das Fernrohr 1 über keine optische Bildstabilisierung verfügt, stellt die Haltetechnik somit den wichtigsten Einflussfaktor dar. Um möglichst scharfe Bilder zu erhalten, ist es daher essenziell Belichtungszeit und Handzittem aufeinander abzustimmen. Dazu wird bei dem Fernrohr 1 mit einem Beschleunigungssensor bzw. mit dem Gyrosensor 19 die Bewegung des Gerätes detektiert (Fig. 1). Der Bewegungszustand des Gerätes kann damit im Millisekunden-Bereich als auch im Sub-Millisekunden-Bereich gemessen werden und erfolgt auf dessen Grundlage eine Überwachung der Bildaufzeichnung. Für diese Überwachung der Bildaufzeichnung ist in der Steuerung 7 ein weiteres Anwendungsprogramm vorgesehen, das die dazu nötigen Auswertungen der Sensorsignale des Beschleunigungssensors bzw. des Gyrosensors 19 durchführt. Basierend auf den Ergebnissen von Vergleichen der Belichtungszeit mit Grenzwerten, die Bilder mit ausreichender Bildschärfe erwarten lassen, erhält der Benutzer entsprechende Hinweise angezeigt. Diese Hinweise bzw. Warnungen des Überwachungsprogramms für die Bildaufzeichnung geben dem Benutzer so eine Hilfestellung bei seiner Entscheidung, eine Bildaufzeichnung auszulösen.

Für die Ermittlung der benötigten Bildschärfe wird dabei davon ausgegangen, dass die durch ein Handzittem verursachte Amplitude der Bewegung während der Dauer der Belichtung unter der linearen Ausdehnung von zwei Pixeln des Bilderfassungssensors der Kamera 4 liegen soll (+/- 1 Pixel). In einem bevorzugten Ausführungsbeispiel, mit einer Brennweite des Kameramoduls 78 von 34,7 mm und einer Pixelgröße 1,1 µm, entspricht dies 13,1" (Winkelsekunden). Die maximale Belichtungszeit beim Schwenken des Fernglases, wenn man keine Bewegungsunschärfe durch das Schwenken haben möchte, ist dann beispielsweise 1/200 s bei einer Schwenkbewegung während der Belichtung von 0,727 °/s.

Gemäß einer ersten Ausführungsvariante des Überwachungsprogramms für die Bildaufzeichnung wird beim Betätigen des Betätigungselementes zum Auslösen der Bildaufzeichnung die momentane Bewegung detektiert (z.B. als Maximum aus einem abgelaufenen Intervall der Dauer von 1 s) und basierend darauf und auf der gewünschten Bildschärfe der Wert der maximalen Belichtungszeit berechnet. Dem Benutzer wird in der Anzeige durch Einblenden eines Symbols angezeigt, ob die Aufnahme mit ausreichender Belichtungszeit aufgenommen werden kann. Dem Benutzer wird eine Warnung angezeigt, wenn die Belichtungszeit nicht ausreichend sein sollte.

In einer alternativen Ausführungsvariante ist eine Belichtungszeit vorgegeben und wird beim Betätigen des Auslösers basierend auf der detektierten momentanen Bewegung die dabei zu erreichende Bildschärfe berechnet. Dem Benutzer wird in der Anzeige durch Einblenden eines Symbols angezeigt, ob die Aufnahme mit der gewünschten Bildschärfe gemacht werden kann. Der Benutzer wird dadurch beispielsweise darüber informiert, ob das aufgenommene Bild für eine automatische Objekterkennung geeignet sein wird. Zusätzlich kann auch vorgesehen sein, dass durch das Überwachungsprogramms für die Bildaufzeichnung in einem solchen Fall die Objekterkennung ganz unterbunden wird.

In einer weiteren Ausführungsvariante ist vorgesehen, dass beim Betätigen des Auslösers zeitlich kurz hintereinander eine Serie von Bildern aufgenommen wird. Die währenddessen jeweils detektierten Bewegungen können anschließend Grundlage bilden, dass z.B. nur das Bild mit der größten Bildschärfe gespeichert wird. Oder es erfolgt eine Reihung der Bilder nach dem Wert der erreichten Bildschärfe. Es kann aber auch alternativ vorgesehen sein, dass nach dem Betätigen der Auslösetaste der Bewegungszustand überprüft wird und erst, wenn die Bewegungen klein genug für die gewählte Belichtungszeit sind, das Bild aufgenommen wird. Eine solche Option sollte optional sein, da es zu unerwünschten Verzögerungen führen kann. Dazu wird vorzugsweise ein maximal möglicher Delay vorgesehen (z.B. 0,5 s). Vor allem der negative Einfluss des Handzitterns durch das Betätigen der Auslösetaste könnte so vermieden werden.

Gemäß Fig. 19 ist das Fernrohr 1 dazu eingerichtet, bei einer Einstellung eines Augenabstandes durch Verschwenken des ersten Tubus 57 und des zweiten Tubus 58 gegeneinander oder bei leichtem Verkippen des gesamten Gerätes, einen Kippwinkel des Tubus mit dem eingespiegelten Display relativ zur Horizontalen zu erfassen und anhand des erfassten Winkels eine Positionskorrektur von auf dem Display 5 dargestellten Informationen 23, 24, 25, 26 vorzunehmen. Hierzu kann die Steuerung 7 dazu eingerichtet sein, eine Darstellung auf dem Display anhand von einem Neigungssensor zur Erfassung des Kippwinkels empfangenen Daten so zu drehen, dass für einen Benutzer, wenn er durch den Sichtkanal 2, 3 blickt, auch bei Veränderung des Augenabstandes oder leichter Verkippung eine aufrechte Darstellung angezeigt wird. Dabei wird der Kippwinkel bei einem Referenzaugenabstand, beispielsweise bei einem Normaugenabstand von typischerweise 68 mm, und bei einer horizontalen Ausrichtung des Fernrohrs als Referenzkippwinkel als Referenzwinkel bestimmt. Bei einer Veränderung des Augenabstandes relativ zum Referenzaugenabstand oder bei leichter Verkippung des Fernrohres zur Horizontalen kann daraus ein Differenzkippwinkel relativ zum Referenzwinkel abgeleitet (Differenzkippwinkel = Differenz zwischen aktuellem Kippwinkel und Referenzwinkel) und die am Display dargestellten Informationen in einem bestimmten Kippbereich, beispielsweise ±10° relativ zum Referenzwinkel, horizontal angezeigt werden.

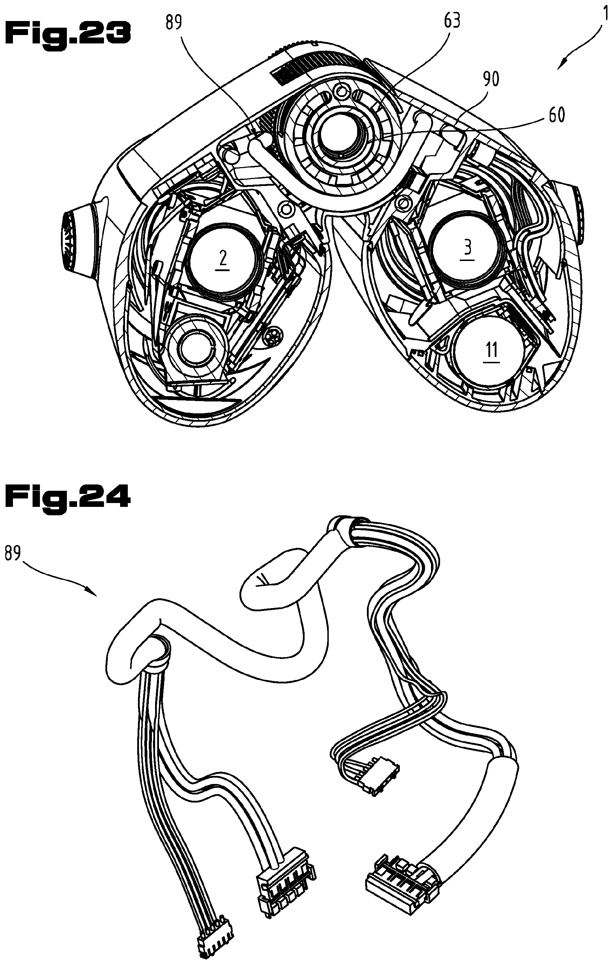

Anhand der Fig. 23 und 24 werden nun noch Details zur Leitungsverbindung zwischen den beiden Gehäuseteilen der beiden Sichtkanäle 2, 3 des Fernrohrs 1 beschrieben. Die Fig. 23 zeigt einen Querschnitt des Fernrohrs 1 gemäß den Fig. 12, 13, perspektivisch dargestellt. In der Fig. 24 ist als ein Detail der internen Leitungsverbindung des Fernrohrs 1 ein Kabelbaum 89 dargestellt.

Bei dem beschriebenen Fernrohr 1 sind vergleichsweise hohe elektrische Leistungen zwischen den beiden Gehäuseteilen zu übertragen. Der Energiespeicher 11 (Batterie) als größte Komponente ist aus platzgründen in dem Sichtkanal 3 (linker Tubus) untergebracht, während das Mainboard (Steuerung 7) als zweitgrößte Komponente im Sichtkanal 3 (rechter Tubus) platziert ist. Insgesamt müssen zehn Watt Leistung übertragen werden. Zusätzlich zu den stromführenden Leitungen des Kabelbaums 89 kommen noch fünf signalübertragende Leitungen zum Einsatz. Konstruktiv zu berücksichtigen sind dabei insbesondere auch die Knickbewegung und zum anderen der zentrale Kamera-Tubus 60. Der Kamera-Tubus 60 steht einer direkten Durchführung des Kabelbaums 89 im Wege. Der Kabelbaum 89 wird also um den Kamera-Tubus 60 herumverlaufend angeordnet. Für das zur Verfügung stehende Ausmaß einer Knickbewegung der beiden Gehäuseteile muss außerdem eine Längenänderung des Kabels berücksichtigt bzw. ausgeglichen werden. Außerdem ist auch eine ausreichende Abdichtung der Leitungsdurchführungen in die beiden Gehäusetuben sicherzustellen.

Für den Kabelbaum 89 sind höchstflexible Leitungen ausgewählt, wobei die Ummantelung der Adern aus einem klebbaren Material hergestellt ist. In dem den zentralen Kamera-Tubus 60 umgebenden Zwischenraum der beiden Gehäuseteile ist ein Kabelkanal 90 ausgebildet, in dem sich ein eine Schlaufe ausbildender Abschnitt des Kabelbaums 89 bei minimaler Knickung verstauen lässt. Außerdem sind die beiden stromführenden Leitungen auf vier Leitungen unterteilt, um mehr Flexibilität zu erreichen. Diese nun neun Leitungen des Kabelbaums 89 sind im äußeren Bereich durch einen dünnen hochflexiblen Schrumpfschlauch ummantelt. Die Litzen werden in die beiden Tuben durch Dichthülsen geführt. Dafür werden die Litzen zunächst in den Dichtbuchsen dicht vergossen. Diese Dichtbuchsen werden dann von außen nach innen mit dem Kabel in das Gehäuse eingeführt und dicht vergossen. Der Kabelbaum 89 wird in beiden Tuben verschraubt und damit zugentlastet. Als thermischer Schutz eines oberhalb eines ICs verlaufenden Abschnitts des Kabelbaums 89 ist dieses durch einen Geflechtschlauch gegen hohe Temperaturen (>80 °C) geschützt.

**Bezugszeichenaufstellung**

| | | | |
|---|---|---|---|
| 1 | Fernrohr | 45 | Endgerät |
| 2 | Sichtkanal | 46 | Anwendungsprogramm |
| 3 | Sichtkanal | 47 | Anwendungsprogramm |
| 4 | Kamera | 48 | Anwendungsprogramm |
| 5 | Display | 49 | Anwendungsprogramm |
| 6 | Treiber | 50 | Anwendungsprogramm |
| 7 | Steuerung | 51 | Anwendungsprogramm |
| 8 | Okular | 52 | Anwendungsprogramm |
| 9 | Anzeigen-Prisma | 53 | Anwendungsprogramm |
| 10 | Anzeigeeinheit | 54 | Parameter |
| 11 | Energiespeicher | 55 | Parameter |
| 12 | Betätigungselement | 56 | Moduswahlrad |
| 13 | Betätigungselement | 57 | Tubus |
| 14 | Betätigungselement | 58 | Tubus |
| 15 | Betätigungselement | 59 | Gelenkbrücke |
| 16 | Sensor | 60 | Kamera-Tubus |
| 17 | Sensor | 61 | Gelenkteil |
| 18 | Sensor | 62 | Gelenkteil |
| 19 | Sensor | 63 | Federanordnung |
| 20 | Sensor | 64 | Wellenfeder |
| 21 | Schnittstelle | 65 | Durchbrechung |
| 22 | Speicher | 66 | Verstellmechanik |
| 23 | Bezeichnung | 67 | Schubstange |
| 24 | Icon | 68 | Mitnehmer |
| 25 | Icon | 69 | Mitnehmer |
| 26 | Icon | 70 | Fokussiering |
| 27 | Grenze | 71 | Linsenfassung |
| 28 | Informationen | 72 | Linsenfassung |
| 29 | Kompassdaten | 73 | Linsenfassung |
| 30 | Bildmitte | 74 | Deckglas |
| 31 | Menüpunkt | 75 | Objektiv |
| 32 | Menüpunkt | 76 | Fokussierlinse |
| 33 | Punkt | 77 | Okular |
| 34 | Punkt | 78 | Kameramodul |
| 35 | Eingabefeld | 79 | LED |
| 36 | Smartphone | 80 | Kondensor |
| 37 | Rahmen | 81 | Linsenarray |
| 38 | Objekt | 82 | Objektivlinse |
| 39 | Bereich | 83 | Fokussierlinse |
| 40 | Markierung | 84 | Umkehrsystem |
| 41 | Anzeigeelemente | 85 | Feldlinse |
| 42 | Benutzer | 86 | Sehfeldrand |
| 43 | Benutzer | 87 | Sehfeldrand |
| 44 | Bilderfassungssystem | 88 | Rand |
| 89 | | | Kabelbaum |
| 90 | | | Kabelkanal |
| 91 | | | Status-LED |

## Patentansprüche

1. Fernrohr (1) mit zumindest einem Sichtkanal (2, 3), **dadurch gekennzeichnet, dass** es zumindest ein in dem zumindest einen Sichtkanal (2, 3) sichtbares, insbesondere in den zumindest einen Sichtkanal (2, 3) eingeblendetes, besonders bevorzugt eingespiegeltes, Display (5) aufweist.

2. Fernrohr (1) nach Anspruch 1, **dadurch gekennzeichnet, dass** es zumindest eine Kamera (4) aufweist.

3. Fernrohr nach Anspruch 2, **dadurch gekennzeichnet, dass** es dazu eingerichtet ist, Objekte (38) in von der Kamera (4) aufgenommenen Bildern zu erkennen.

4. Fernrohr nach Anspruch 3, **dadurch gekennzeichnet, dass** es dazu eingerichtet ist, einen virtuellen Markierungsrahmen (24) zu erzeugen und auf dem Display darzustellen, wobei es weiters dazu eingerichtet ist, zumindest ein innerhalb des Markierungsrahmens (24) des Displays (5), dargestelltes Objekt (38) zu erkennen.

5. Fernrohr nach einem der Ansprüche 1 bis 4, **dadurch gekennzeichnet, dass** es dazu eingerichtet ist, bei einer Betätigung eines Betätigungselements basierend auf einer detektierten momentanen Bewegung des Fernrohres, eine zu erreichende Bildschärfe für ein mit der Kamera (4) aufzunehmendes Bild zu berechnen und dem Benutzer anzuzeigen, ob die Aufnahme mit der gewünschten Bildschärfe gemacht werden kann und/oder dem Benutzer anzuzeigen, ob die zu erreichende Bildschärfe für eine automatische Objekterkennung geeignet ist.

6. Fernrohr nach einem der Ansprüche 1 bis 5, **dadurch gekennzeichnet, dass** es zumindest einen Speicher (22) mit benutzer- und/oder themen- und/oder ortsspezifischen Informationen, insbesondere Informationen zu lokal vorkommenden Tierarten und/oder Flurbezeichnung und/oder Bergnamen und/oder POIs aufweist und/oder, dass das Fernrohr eine Datenschnittstelle zum Datenaustausch mit zumindest einem externen Speicher mit benutzer- und/oder themen- und/oder ortsspezifischen, Informationen, insbesondere Informationen zu lokal vorkommenden Tierarten und/oder Flurbezeichnung und/oder Bergnamen und/oder POIs aufweist.

7. Fernrohr nach einem der Ansprüche 1 bis 6, **dadurch gekennzeichnet, dass** es zumindest eine Kamera Fokussierlinse (76) und zumindest eine in dem Sichtkanal angeordnete Fokussierlinse aufweist, wobei das Fernrohr (1) dazu eingerichtet ist, eine relative Lage einer Bildmitte (30) eines Kamerabilds relativ zu einer Bildmitte eines in dem zumindest einen Sichtkanal dargestellten Bildes anhand einer Verschiebung der Fokussierlinsen zu ermitteln.

8. Fernrohr nach einem der Ansprüche 1 bis 7, **dadurch gekennzeichnet, dass** ein Sehfeld der Kamera (4) größer ist als ein Sehfeld des zumindest einen Sichtkanals (2, 3), wobei ein von einem Bilderfassungssensor der Kamera (4) erfasster feldseitiger Bildausschnitt größer als ein von dem zumindest einen Sichtkanal (2, 3) erfasster feldseitiger Bildausschnitt ist.

9. Fernrohr nach einem der Ansprüche 1 bis 8, **dadurch gekennzeichnet, dass** es dazu eingerichtet ist, ein in einer aktuellen Position und Lage des Fernrohres (1) abgebildetes Objekt (38) mit einer virtuelle Markierung (40) zu versehen und zu speichern.

10. Fernrohr nach Anspruch 9, **dadurch gekennzeichnet, dass** es dazu eingerichtet ist, bei einer Veränderung einer Ausrichtung des Fernrohres (1) gegenüber jener Position, an der die virtuelle Markierung (40) gesetzt ist, zumindest einen Hinweis einzublenden, der einem Benutzer eine Richtung anzeigt, in der sich die virtuellen Markierung (40) befindet.

11. Fernrohr nach einem der Ansprüche 1 bis 10, **dadurch gekennzeichnet, dass** das Fernrohr ein, bevorzugt an einer benutzerseitigen Stirnseite des Fernrohres angeordnetes, Moduswahlrad (56) zum Aufrufen zumindest einer Funktion des Fernrohres (1) aufweist, wobei in unterschiedlichen Stellungen des Moduswahlrades (56) unterschiedliche Funktionen aufgerufen sind.

12. Fernrohr nach Anspruch 11, **dadurch gekennzeichnet, dass** zumindest eine Stellung des Moduswahlrades (56) mit einer von einem Benutzer wählbaren Funktion belegbar ist.

13. Fernrohr nach einem der Ansprüche 2 bis 12, **dadurch gekennzeichnet, dass** es ein binokulares Fernrohr mit einem ersten Tubus (57) und mit einem zweiten Tubus (58) ist, wobei durch den ersten Tubus (57) ein erster Sichtkanal und durch den zweiten Tubus (58) ein zweiter Sichtkanal verläuft,
- wobei die beiden Tuben (57, 58) durch eine Gelenkbrücke (59) miteinander verbunden sind,
- wobei die beiden Tuben (57, 58) zur Einstellung eines Augenabstands um eine Gelenkachse der Gelenkbrücke (59) schwenkbar sind,
- und wobei die Kamera (4) einen Kamera-Strahlengang aufweist,
- wobei die Gelenkachse und eine optische Achse des Kamera-Strahlengangs koaxial zueinander angeordnet sind,
- und wobei ein den Kamera-Strahlengang enthaltender Kamera-Tubus (60) die Gelenkachse der Gelenkbrücke (59) bildet.

14. Binokulares Fernrohr nach Anspruch 13, **dadurch gekennzeichnet, dass** es dazu eingerichtet ist, bei einer Einstellung eines Augenabstandes durch Verschwenken des ersten und des zweiten Tubus (57, 58) gegeneinander, einen Schwenkwinkel zu erfassen und anhand des erfassten Schwenkwinkel eine Positionskorrektur von auf dem Display (5) dargestellten Informationen vorzunehmen.

15. Beobachtungs- und Bilderfassungssystem, **dadurch gekennzeichnet, dass** es zumindest ein Fernrohr (1) nach einem der Ansprüche 1 bis 13 und zumindest ein elektronisches Endgerät (45) umfasst, wobei das zumindest eine Fernrohr (1) und das zumindest eine elektronische Endgerät (45) über eine Verbindung zumindest zeitweise miteinander gekoppelt sind.
